**Europäisches Patentamt**

**European Patent Office**

**Office européen des brevets**

(19)

(11) **EP 0 681 119 B1**

(12) **EUROPEAN PATENT SPECIFICATION**

(45) Date of publication and mention
of the grant of the patent:
**11.07.2001 Bulletin 2001/28**

(51) Int Cl.7: **B60K 41/14**, F16H 59/02

(21) Application number: **95105631.6**

(22) Date of filing: **13.04.1995**

(54) **Vehicle transmission control apparatus**

Fahrzeuggetriebesteuerungsanordnung

Dispositif de commande de transmission de véhicule

(84) Designated Contracting States:
**DE FR GB**

(30) Priority: **02.05.1994 JP 11596094**

(43) Date of publication of application:
**08.11.1995 Bulletin 1995/45**

(73) Proprietor: **AISIN AW CO., LTD.**
**Anjo-shi Aichi-ken 444-11 (JP)**

(72) Inventors:
• **Moroto, Shuzo**
**Nagoya-shi, Aichi-ken 458 (JP)**

• **Sakakibara, Shiro**
**Anjo-shi, Aichi-ken 446 (JP)**
• **Kume, Akihiro**
**Hazu-gun, Aichi-ken 444-07 (JP)**

(74) Representative: **VOSSIUS & PARTNER**
**Siebertstrasse 4**
**81675 München (DE)**

(56) References cited:
**EP-A- 0 443 424          EP-A- 0 519 528**
**WO-A-90/04119          WO-A-94/24463**
**DE-C- 4 120 540**

## Description

The present invention relates to a control apparatus for a vehicle transmission.

Hitherto, in vehicle transmissions such as multistage transmissions or non-stage transmissions, in a change of the torque ratio, an automatic speed change mode and a manual speed change mode can be selected. In the automatic speed change mode, the torque ratio of the vehicle transmission is automatically set in a range of from a maximum torque ratio to a minimum torque ratio in association with the running conditions of a vehicle such as an engine speed, the degree of the opening of a throttle, a vehicle speed, the temperature of a cooling water, the number of revolutions of an input pulley, or the number of revolutions of an output pulley.

On the other hand, in the manual speed change mode, a driver can set an arbitrary torque ratio.

The changeover between the automatic speed change mode and the manual speed change mode as well as the setting of the torque ratios in the manual speed change mode can be performed by manipulating an operating unit such as a shift lever, a manual setter, an automatic/manual change-over switch.

A first operating unit is arranged so that the changeover between automatic speed change mode and the manual speed change mode, the changeover between the respective ranges in the automatic speed change mode, and the setting of the torque ratios in the manual speed change mode can be performed by only the shift lever. For that reason, in the shift region of the shift lever, an automatic speed change mode region and a manual speed change mode region are contiguously formed.

Therefore, the changeover between the respective ranges in the automatic speed change mode region can be made by shifting the shift lever, and the setting of the respective torque ratios of from the maximum torque ratio to the minimum torque ratio in the manual speed change mode region can be made by shifting the shift lever likewise (refer to Japanese Patent Unexamined Publication No. Sho 61-115738).

Also, a second operating apparatus is arranged in such a manner that the changeover between the respective ranges in the automatic speed change mode is made by the shift lever, and the setting of the torque ratios in the manual speed change mode is made by a manual setter such as a slide volume. Thus, the changeover between the automatic speed change mode and manual speed change mode can be performed by a automatic/manual change-over switch.

Hence, the changeover between the respective ranges can be performed by shifting the shift lever, the setting of the respective torque ratios to a value between the maximum torque ratio and the minimum torque ratio can be performed by shifting the manual setter, and the changeover between the automatic speed change mode and the manual speed change mode can be performed by changing over the automatic/manual change-over switch. In this case, when the automatic/manual change-over switch is operated to change over from the manual speed change mode to the automatic speed change mode, the setting made by the manual setter is ignored. When the automatic/manual change-over switch is operated to change over from the automatic speed change mode to the manual speed change mode, the vehicle transmission is actuated in accordance with the torque ratio set by the manual setter.

However, the foregoing conventional vehicle transmission makes the driver operate the manual speed change operating unit such as the shift lever and automatic/manual change-over switch to set conditions of completion of the speed change such as a desired torque ratio or a speed change gear. Thus, the speed change is started so that the conditions of completion of the speed change are attained.

In this case, the skilled driver could operate the manual speed change operating unit in accordance with the characteristics of the vehicle. However, if the driver is not skilled, upon erroneously setting the manual speed change operating unit, not only he is required to repeatedly operate the manual speed change operating unit, but also the speed change of the up-shift and the speed change of the down-shift are alternately repeated.

Also, in the vehicle transmission capable of switching over between the automatic speed change mode and the manual speed change mode, when the first operating unit is operated to change from the automatic speed change mode to the manual speed change mode, the shift lever is shifted from the automatic speed change mode region to the manual speed change mode region. However, the manual speed change mode region is arranged so that the respective torque ratios of from the maximum torque ratio to the minimum torque ratio can be set by shifting the shift lever. Therefore, as soon as the shift lever is shifted to the manual speed change mode region, the vehicle transmission is caused to be set to the maximum torque ratio or the minimum torque ratio.

Then, the driver shifts the shift lever to a predetermined position in the manual speed change mode region, thereby setting the vehicle transmission to an expected torque ratio.

Accordingly, the vehicle transmission is set to a torque ratio other than the expected torque ratio during the above operation regardless of the selection of the manual speed change mode. Thus, the driver cannot change the speed so as to satisfy speed change conditions expected by the driver. As a result, the driver feels discordant.

On the other hand, when the first operating unit is operated to change from the manual speed change mode to the automatic speed change mode, the shift lever is shifted from the region of the manual speed change mode to the region of the automatic speed change mode. However, the region of the manual speed change mode is arranged so that the respective torque ratios of from the maximum torque ratio to the minimum torque ratio can be set by shifting the shift lever. Therefore, the torque ratio of the vehicle transmission is caused to be set to the maximum torque ratio or the minimum torque ratio immediately before the shift lever is shifted to the automatic speed change mode region.

Therefore, the driver cannot change the speed to speed change conditions expected by the driver even at the time of changing to the automatic speed change mode, whereby the fluctuation of the torque is generated and the driver feels discordant.

Also, when the second operating unit is operated to change over from the automatic speed change mode to the manual speed change mode, as well as from the manual speed change mode to the automatic speed change mode, the driver feels discordant. However, when changing over from the automatic speed change mode to the manual speed change mode, if the automatic/manual change-over switch is changed over to the manual speed change mode after the manual setter is moved to a rough position, then the manual setter must be moved to a predetermined position. Thus, the changeover operation is troublesome.

DE-C-41 20 540 which discloses the features of the preamble of claim 1, encloses an infinitely variable change-speed gear. Therein it is suggested that when the driver operates the shift lever to plus position or minus position once, the present gear ratio of the transmission is changed stepwise to the next gear ratio which is decided on basis of the driving style of the driver or the behaviour depending on the traffic situation.

EP-A-0 519 528 discloses a transmission control module of an automatic transmission, A shift control means is adapted to command a gear or a gear range increment or decrement depending on the switching of an enabling switch and one of an up-shift switch and a down-shift switch.

The present invention has been made to solve the problems with the foregoing conventional vehicle transmission, and therefore an object of the invention is to provide a control apparatus for a vehicle transmission which is capable of surely changing the speed to an expected speed change condition without repeatedly operating the manual speed change operating unit even if the driver is not skilled.

Another object of the invention is to provide a control apparatus for a vehicle transmission which is simple in the manipulation of changing over between the automatic speed change mode and the manual speed change mode so that the driver does not feel discordant.

The above objects are achieved with the features of the claims.

Upon operation of the manual speed change operating unit, the speed change condition setting means starts the speed change of the up-shift with the start of the up-shift operation, and completes the speed change of the down-shift with the completion of the up-shift operation. Also, the speed change condition setting means starts the speed change of the down-shift with the start of the down-shift operation and completes the speed change of the down-shift with the completion of the down-shift operation.

Accordingly, in the case where the driver does not perform the up-shift operation or the down-shift operation through the manual speed change operating unit, the speed change is not executed. The speed change is executed only while the up-shift operation or the down-shift operation is executed through the manual speed change operating unit.

As a result, the driver can surely set a desired torque ratio so that the driver does not feel discordant, thereby making it unnecessary to repeatedly operate the manual speed change operating unit.

The changeover between the automatic speed change mode and the manual speed change mode is executed immediately after the driver operates the manual speed change operating unit manually. Then, the speed change condition setting means starts the speed change of the up-shift with the start of the up-shift operation simultaneously when the changeover between the automatic speed change mode and the manual speed change mode is executed, and completes the speed change of the up-shift with the completion of the up-shift operation. Similarly, the speed change condition setting means starts the speed change of the down-shift operation with the start of the down-shift operation and completes the speed change of the down-shift with the completion of the down-shift operation.

Accordingly, in the case where the driver does not perform the up-shift operation or the down-shift operation through the manual speed change operating unit, the speed change is not executed. The speed change is executed only while the up-shift operation or the down-shift operation is being executed through the manual speed change operating unit.

The above and other objects and features of the present invention will be more apparent from the following description taken in conjunction with the accompanying drawings.

Fig. 1 is a block diagram showing a manual speed change operating unit in accordance with a first embodiment of the present invention;

Fig. 2 is a first sectional view showing a non-stage transmission in accordance with the first embodiment of the present invention;

Fig. 3 is a second sectional view showing the non-stage. transmission in accordance with the first embodiment of the present invention;

Fig. 4 is a third sectional view showing a non-stage transmission in accordance with the first embodiment of the present invention;

Fig. 5 is a first systematic diagram showing a vehicle equipped with the non-stage transmission in the first embodiment of the present invention;

Fig. 6 is a second systematic diagram showing the vehicle equipped with the non-stage transmission in the first embodiment of the present invention;

Fig. 7 is a first control block diagram showing an ECU in accordance with the first embodiment of the present invention;

Fig. 8 is a second control block diagram showing the ECU in accordance with the first embodiment of the present invention;

Fig. 9 is a third control block diagram showing the ECU in accordance with the first embodiment of the present invention;

Fig. 10 is a main flowchart showing the operation of a control apparatus for a vehicle transmission in accordance with the first embodiment of the present invention;

Fig. 11 is a graph showing a desired torque ratio upper/lower limit calculation map in accordance with the first embodiment of the present invention;

Fig. 12 is a conceptual diagram showing a manual speed change operating unit in accordance with the first embodiment of the present invention;

Fig. 13 is a graph showing a state where the automatic speed change mode is changed over to the manual speed change mode in accordance with the first embodiment of the present invention;

Fig. 14 is a graph showing a state where the manual speed change mode is changed over to the automatic speed change mode in accordance with the first embodiment of the present invention;

Fig. 15 is a flowchart showing the operation of the automatic/manual change-over process in accordance with the first embodiment of the present invention;

Fig. 16 is a circuit diagram showing a switch circuit in accordance with the first embodiment of the invention;

Fig. 17 is a diagram showing a first operation mode of the switch circuit in accordance with the first embodiment of the present invention;

Fig. 18 is a diagram showing a second operation mode of the switch circuit in accordance with the first embodiment of the present invention;

Fig. 19 is a table illustrating an output voltage of the switch circuit in accordance with the first embodiment of the present invention;

Fig. 20 is a diagram showing an example of elements in the switch circuit in accordance with the first embodiment of the present invention;

Fig. 21 is a diagram showing a distribution of output voltage of the switch circuit in accordance with the first embodiment of the present invention;

Fig. 22 is a first flowchart of the CVT speed change judging process in accordance with the first embodiment of the present invention;

Fig. 23 is a second flowchart of the CVT speed change judging process in accordance with the first embodiment of the present invention;

Fig. 24 is a graph illustrating a desired change speed map in accordance with the first embodiment of the present invention;

Fig. 25 is a flowchart showing the motor control process in accordance with the first embodiment of the present invention;

Fig. 26 is a graph showing a duty ratio map in accordance with the first embodiment of the present invention;

Fig. 27 is a circuit diagram showing the motor drive driver in accordance with the first embodiment of the present invention;

Fig. 28 is a graph showing a desired motor revolution number map in accordance with the first embodiment of the present invention;

Fig. 29 is a flowchart showing an automatic/manual change-over process in accordance with a second embodiment of the present invention;

Fig. 30 is a conceptual diagram showing a manual speed change operating unit in accordance with a third embodiment of the present invention;

Fig. 31 is a block diagram showing the manual speed change operating unit in accordance with the third embodiment of the present invention;

Fig. 32 is a flowchart showing the automatic/manual change-over process in accordance with the third embodiment of the present invention;

Fig. 33 is a block diagram showing a manual speed change operating unit in accordance with a fourth embodiment of the present invention;

Fig. 34 is a graph showing a first requested change speed map in accordance with the fourth embodiment of the present invention; and

Fig. 35 is a graph showing a second requested change speed map in accordance with the fourth embodiment of the present invention.

Hereinafter, a description will be given in detail of embodiments of the present invention with reference to the accompanying drawings. In the embodiments, as a vehicle transmission, a V-belt type non-stage transmission in which an interval of V-shaped grooves of an input pulley and an output pulley is changed by motor-driving and the rotation of both the pulleys is converted in the non-stage fashion by changing the actual diameter of both the pulleys will be described. The present invention is also applicable to a multi-stage transmission in which a plurality of speeds are formed by combination of a plurality of speed change gears.

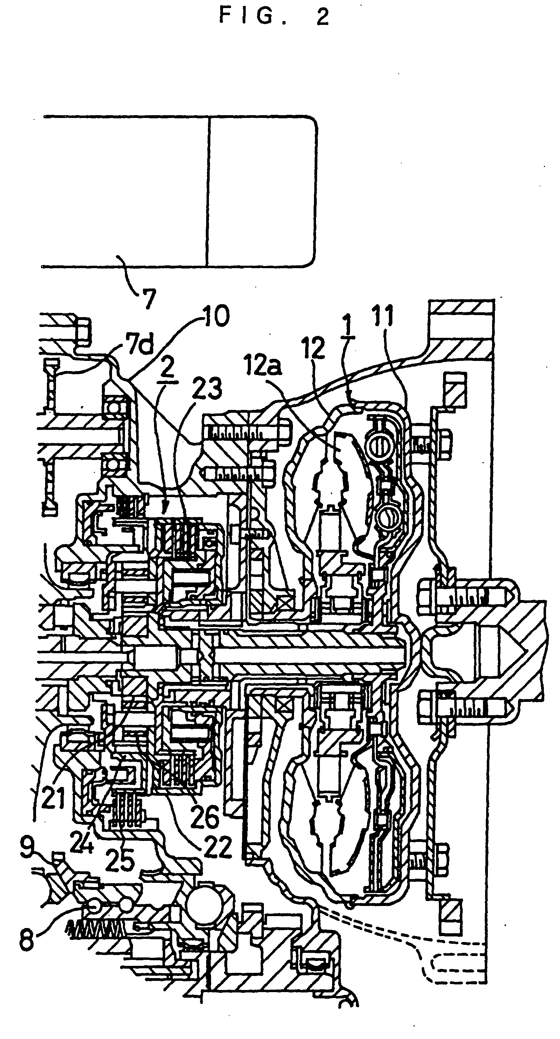

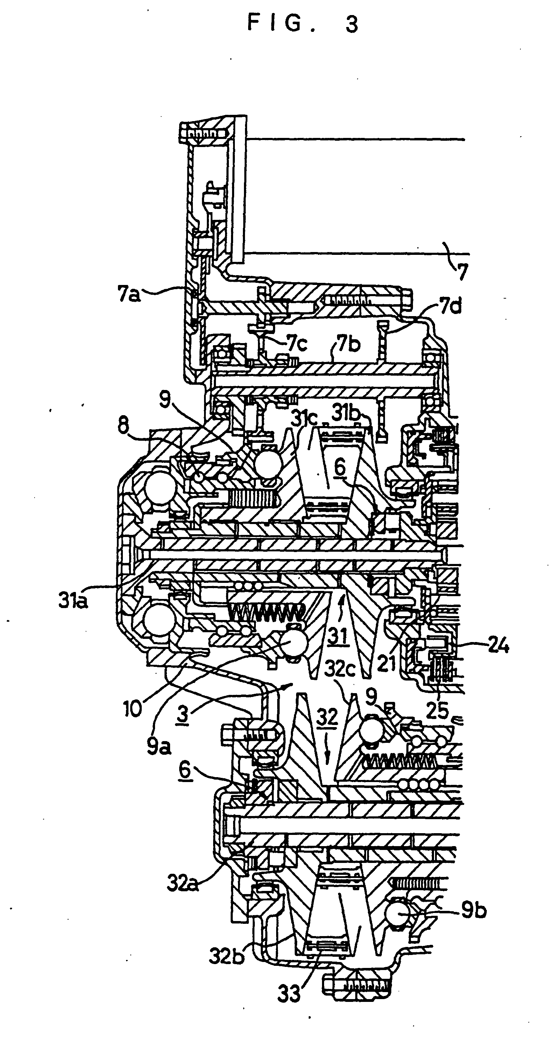

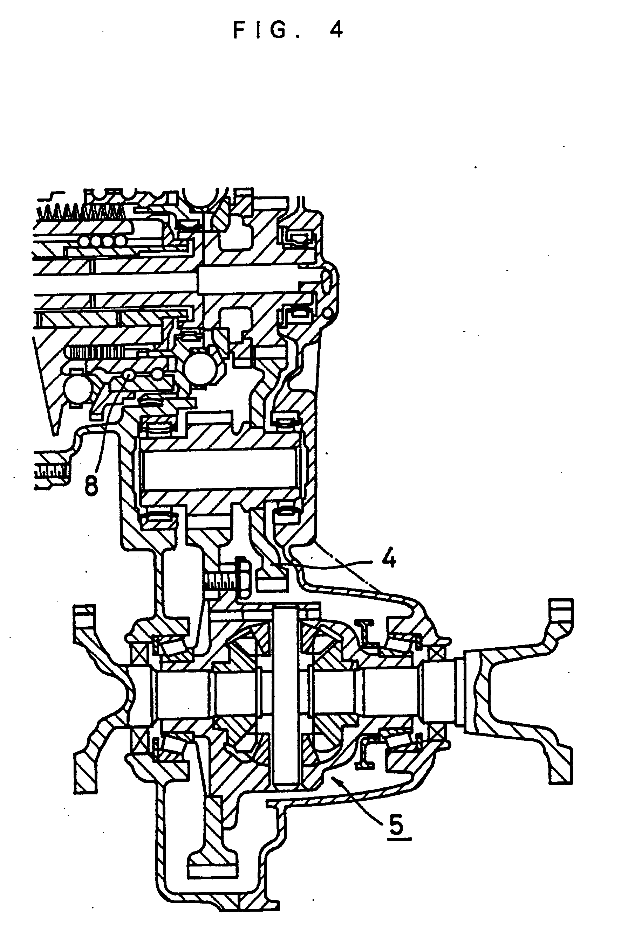

Fig. 2 is a first sectional view showing a non-stage transmission in accordance with a first embodiment of the present invention. Fig. 3 is a second sectional view showing a non-stage transmission in accordance with the first embodiment of the present invention. Fig. 4 is a third sectional view showing a non-stage transmission in accordance with the first embodiment of the present invention.

As shown in those figures, the non-stage transmission includes a starting unit 1 consisting of a torque convertor 12, a forward/reverse change-over unit 2 consisting of a dual planetary gear unit having a sun gear 21 which inputs the output of a turbine 12a of the torque convertor 12, and a non-stage gear shifter (CVT) 3 having a primary sheave 31 which inputs the output of a carrier 22 of the forward/reverse change-over unit 2 for performing the non-stage speed change through a V-belt 33 between the primary sheave 31 and the secondary sheave 32. Then, the non-stage transmission is arranged so that the output of the non-stage gear shifter 3 is supplied to a differential gear mechanism 5 through a counter gear 4.

A multiple disk clutch (hereinafter referred to as "forward clutch") 23 is disposed between the carrier 22 and the sun gear 21 in the forward/reverse change-over unit 2. Similarly, a multiple disk brake (hereinafter referred to as "reverse brake") 25 is disposed between a ring gear 24 and a case 10 of the non-stage transmission. In the engagement of the forward clutch 23, the sun gear 21 and the carrier 22 are directly coupled with each other so that the forward/reverse change-over unit 2 outputs the forward rotation. In the engagement of the reverse brake 25, the ring gear 24 is fixed so that a pinion 26 revolves, and the revolution of the pinion 25 is transmitted to the carrier 22 with the result that the forward/reverse change-over unit 2 outputs the reverse rotation. In this case, the forward rotation and the reverse rotation are transmitted to a primary sheave shaft 31a with the transmission gear ratio of 1:1.

Standing cam type thrust mechanisms 6 are arranged between the carrier 22 and a fixed sheave 31b and between a secondary sheave shaft 32a and a fixed sheave 32b, respectively, in such a manner that thrust corresponding to torque is given to the fixed sheaves 31b and 32b. Contact forces between the primary sheave 31 and the V-belt 33 and between the V-belt 33 and the secondary sheave 32 are changed so as to correspond to load, thereby preventing slides between the primary sheave 31 and the V-belt 33 and between the V-belt 33 and the secondary sheave 32.

A CVT speed change motor 7 is attached onto the top of the non-stage transmission so that the rotation of the CVT speed change motor 7 is transmitted to two gears 7c and 7d of a speed change shaft 7b through a reduction gear 7a, and further transmitted to a collar 9 supported through a ball screw mechanism 8 by the case 10. The axial movement of the collar 9 is transmitted to movable sheaves 31c and 32c through ball bearings 9a and 9b. In this embodiment, the speed change operation of the non-stage gear shifter 3 is made by the CVT speed change motor 7, however, it may be performed by a hydraulic control unit not shown.

Subsequently, a description will be given of a system for a vehicle which is equipped with the foregoing non-stage transmission.

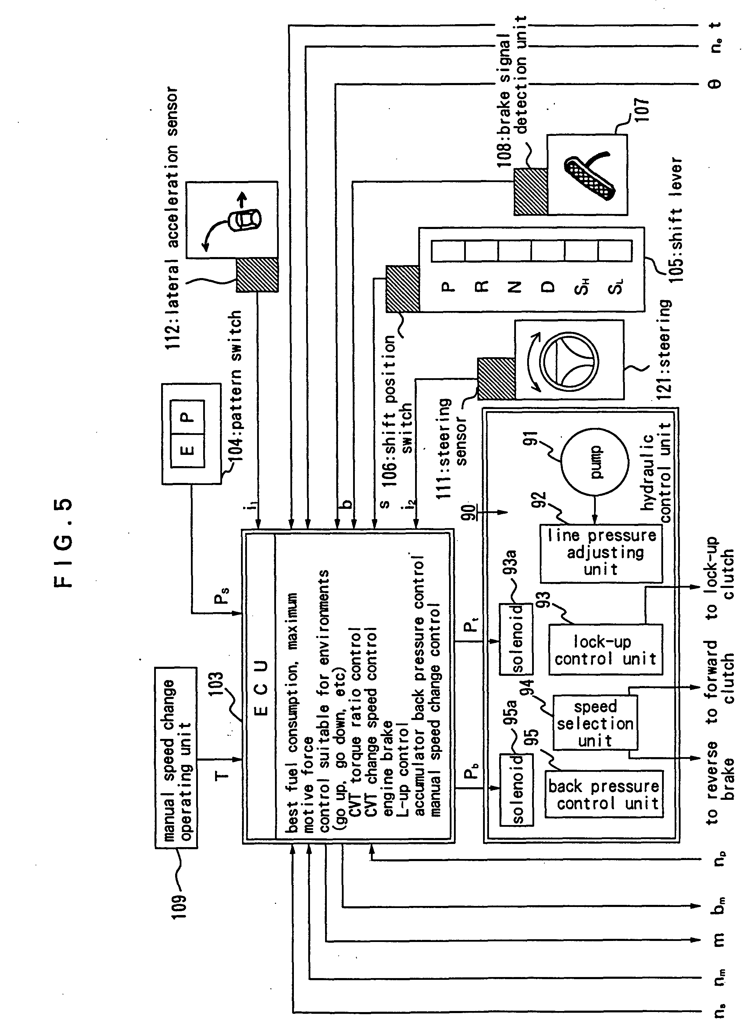

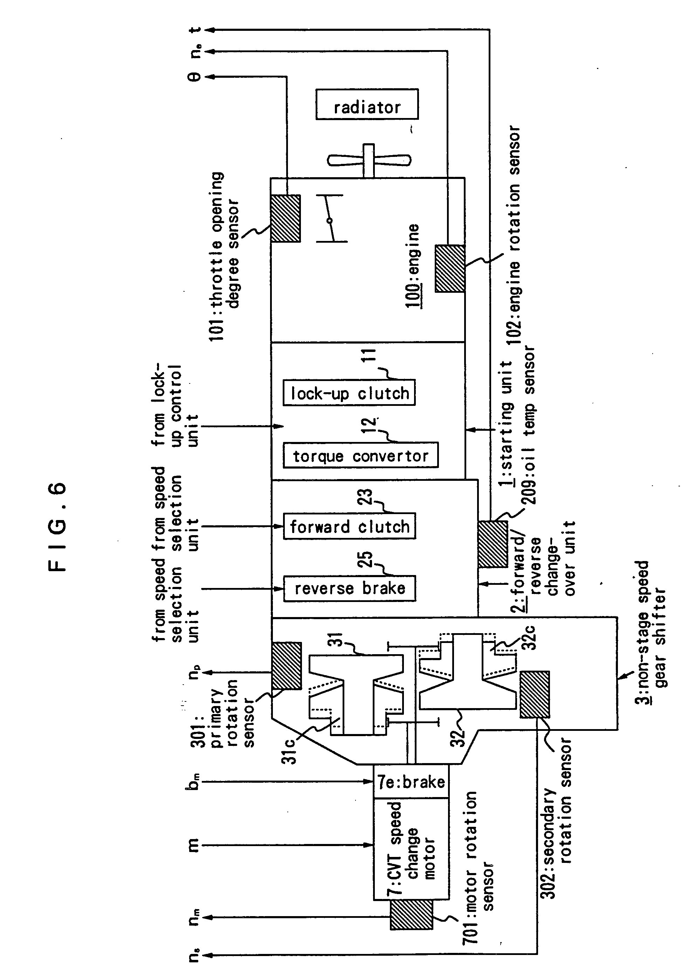

Fig. 5 is a first systematic diagram showing a vehicle equipped with the non-stage transmission in the first embodiment of the present invention, and Fig. 6 is a second systematic diagram showing the vehicle equipped with the non-stage transmission in the first embodiment of the present invention.

As shown in the figures, the starting unit 1 is coupled with an engine 100, and the non-stage gear shifter 3 is coupled with an axle shaft not shown through the differential gear mechanism 5 (Fig. 4).

The engine 100 is provided with a throttle opening degree sensor 101 as well as an engine rotation sensor 102. The throttle opening degree sensor 101 and the engine rotation sensor 102 are connected to an ECU 103, respectively, so as to output a throttle opening degree signal $\theta$ and an engine speed signal $n_e$ to the ECU 103, respectively.

A lock-up clutch 11 and a torque convertor 12 are controlled by the hydraulic control unit 90 together.

The forward/reverse change-over unit 2, as described above, includes the forward clutch 23 and the reverse brake 25, and the forward clutch 23, and the reverse brake 25 are also controlled by the hydraulic control unit 90 to perform the changeover between the forward and reverse movements. Also, the forward/reverse change-over unit 2 is provided with an oil temperature sensor 209 for an automatic transmission (hereinafter referred to as "A/T"). Similarly, the oil temperature sensor 209 is connected to the ECU 103 so as to output an oil temperature signal t for a working oil within the non-stage transmission to the ECU 103.

In the non-stage gear shifter 3, the movable sheave 31c of the primary sheave 31 and the movable sheave 32c of the secondary sheave 32 are properly controlled by the CVT speed change motor 7 in association with a set torque ratio. The CVT speed change motor 7 and a holding brake 7e are actuated on the basis of a CVT speed change motor control signal m and a motor holding brake signal $b_m$ from the ECU 103. Further, the CVT speed change motor 7 is equipped with a motor rotation sensor 701 which outputs a motor revolution number signal $n_m$ to the ECU 103.

A primary rotation sensor 301 and a secondary rotation sensor 302 are connected to the ECU 103, respectively, so that they detect the numbers of revolutions of the respective corresponding primary and secondary sheaves 31 and 32 to output a primary sheave revolution number signal $n_p$ as well as a secondary sheave revolution number signal $n_s$ to the ECU 103.

The hydraulic control unit 90 includes a pump 91, a line pressure adjusting unit 92, a lock-up control unit 93, a speed selection unit 94, and a back pressure control unit 95. The lock-up control unit 93 allows the on/off operation and duty of a solenoid 93a to be controlled in accordance with a lock-up solenoid drive signal $P_t$ from the ECU 103, to thereby actuate the lock-up clutch 11. The speed selection unit 94 allows the forward clutch 23 as well as the reverse brake 25 to be disengaged. The back pressure control unit 95 allows the on/off operation and duty of a solenoid 95a to be controlled in accordance with a back pressure control solenoid drive signal $P_b$ from the ECU 103, to thereby control the back pressures of accumulators (not shown) of the forward clutch 23 and the reverse brake 25.

A pattern selection unit 104 is arranged to select an economy mode (E) and a power mode (P) and outputs a pattern signal $P_s$ to the ECU 103.

A shift lever 105 is arranged for selecting ranges in the automatic speed change mode and provided with a shift position switch 106. The shift lever switch 106 detects shift positions P, R, N, D, $S_H$ and $S_L$ of the shift lever 105 to output a shift position signal s to the ECU 103.

On the other hand, a manual speed change operating unit 109 is arranged to select the torque ratio in the manual speed change mode to output an operation signal T related to the mode and torque ratio selected by the manual speed change operating unit 109 to the ECU 103.

Furthermore, a foot brake 107 is disposed to control the vehicle and provided with a brake signal detection unit 108 which outputs a brake signal b to the ECU 103.

Reference numeral 112 denotes a lateral acceleration sensor for detecting the acceleration of the vehicle in the lateral direction. The lateral acceleration sensor 112 outputs a lateral acceleration signal $i_1$ to the ECU 103. Reference numeral 121 denotes a steering which is provided with a steering angle sensor 111. The steering angle sensor 111 outputs a steering angle signal $i_2$ to the ECU 103.

Thus, the ECU 103 actuates the hydraulic control unit 90 and the non-stage gear shifter 3 by outputting the lock-up solenoid drive signal $P_t$, the back pressure control solenoid drive signal $P_b$, the CVT speed change motor control signal m and the motor holding brake signal $b_m$ on the basis of the throttle opening degree signal $\theta$, the oil temperature signal t, the engine speed signal $n_e$, the motor revolution number signal $n_m$, the primary sheave revolution number signal $n_p$, the secondary sheave revolution number signal $n_s$, the shift position signal s, the pattern signal $P_s$, the operation signal T, the brake signal b, the lateral acceleration signal $i_1$ and the steering angle signal $i_2$, respectively.

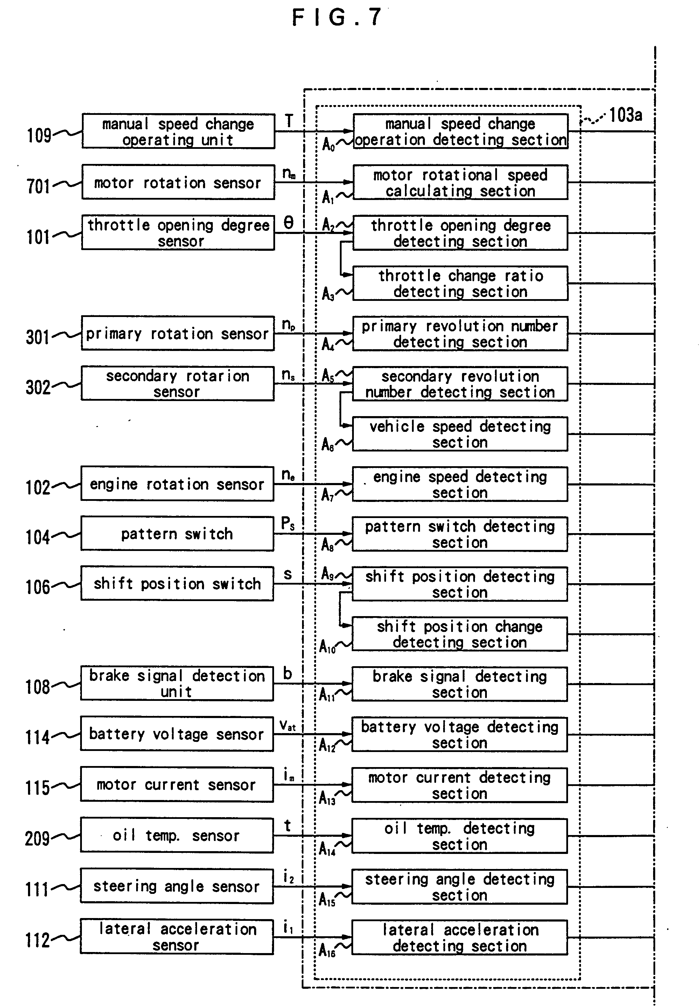

Subsequently, a description will be given of the ECU 103, with reference to Figs. 7 to 9.

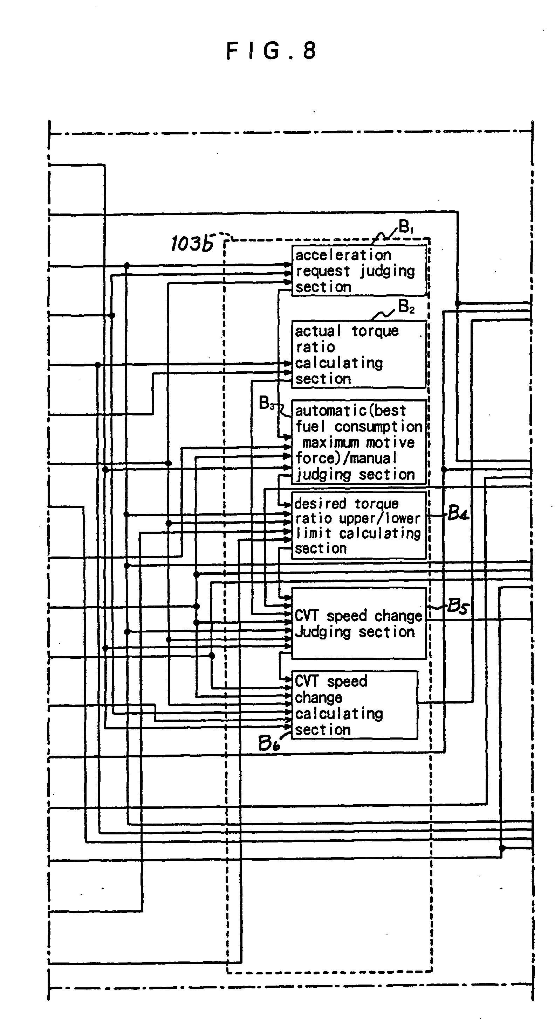

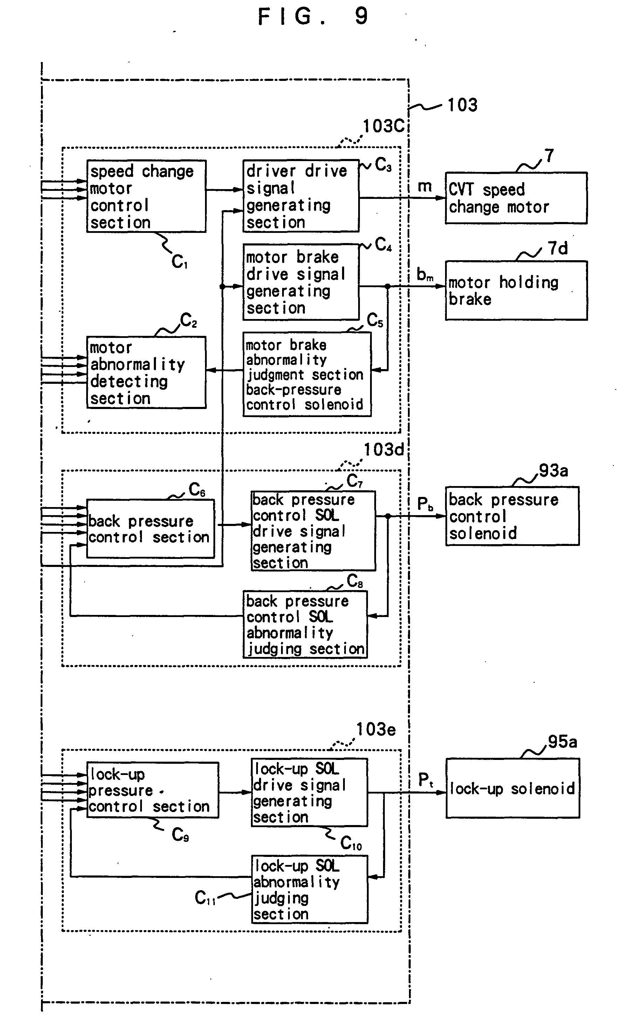

Fig. 7 is a first control block diagram showing the ECU in accordance with the first embodiment of the present invention. Fig. 8 is a second control block diagram showing the ECU in accordance with the first embodiment of the present invention. Fig. 9 is a third control block diagram showing the ECU in accordance with the first embodiment of the present invention.

As shown in those figures, the ECU 103 is comprised of an input section 103a, an operation section 103b and an output section.

The input section 103a includes a manual speed change operation detecting section $A_0$ which inputs the operation signal T from the manual speed change operating unit 109, a motor rotational speed calculating section $A_1$ which inputs the motor revolution number signal $n_m$ from the motor rotation sensor 701, a throttle opening degree detecting section $A_2$ which inputs the throttle opening degree signal $\theta$ from the throttle opening degree sensor 101, and a throttle change ratio detecting section $A_3$ which detects a throttle change ratio on the basis of the throttle opening degree signal $\theta$ inputted to the throttle opening degree detecting section $A_2$ and a period of time counted by a soft timer not shown.

The input section 103a also includes a primary revolution number detecting section $A_4$ which inputs the primary sheave revolution number signal $n_p$ from the primary rotation sensor 301, a secondary revolution number detecting section $A_5$ which inputs the secondary sheave revolution number signal $n_s$ from the secondary rotation sensor 302, a vehicle speed detecting section $A_6$ which detects a vehicle speed v as well as a vehicle speed change ratio on the basis of the secondary sheave revolution number signal $n_s$ inputted to the secondary revolution number detecting section $A_5$, an engine speed detecting section $A_7$ which inputs the engine revolution number signal $n_e$ from the engine rotation sensor 102, a pattern switch detecting section $A_8$ which inputs the economy mode or power mode from the pattern switch 104, a shift position detecting section $A_9$ which inputs the shift position signal s from the shift position switch 106, and a shift position change detecting section $A_{10}$ which detects a shift position change ratio on the basis of the shift position signal s inputted to the shift position detecting section $A_9$.

The input section 103a further includes a brake signal detecting section $A_{11}$ which inputs the brake signal b from the brake signal detection unit 108, a battery voltage detecting section $A_{12}$ which inputs a battery voltage signal $V_{at}$ from the battery voltage sensor 114, a motor current detecting section $A_{13}$ which inputs a motor current signal $i_m$ from a motor current sensor 115, an oil temperature detecting section $A_{14}$ which inputs the oil temperature signal t from the oil temperature sensor 209, a steering angle detecting section $A_{15}$ which inputs the steering angle signal $i_2$ from the steering angle sensor 111, and a lateral acceleration detecting section $A_{16}$ which inputs the lateral acceleration signal $i_1$ from the lateral acceleration sensor 112.

The operation section 103b includes an acceleration request judging section $B_1$, an actual torque ratio calculating section $B_2$, an automatic (best fuel consumption, maximum motive force)/manual judging section $B_3$, a desired torque ratio upper/lower limit calculating section $B_4$, a CVT speed change judging section $B_5$ and a CVT change speed calculating section $B_6$.

The output section includes a control signal output section 103c for controlling the CVT speed change motor 7 and the holding brake 7d, a back pressure control signal output section 103d for controlling the back pressure of the accumulators (not shown) in the hydraulic control unit 90 (Fig. 5) of the non-stage gear shifter 3, and a lock-up control signal output section 103e for controlling the lock-up clutch 11.

The control signal output section 103c includes a speed change motor control section $C_1$, a motor abnormality detecting section $C_2$, a driver drive signal generating section $C_3$, a motor brake drive signal generating section $C_4$ and a motor brake abnormality judging section $C_5$. The back pressure control signal output section 103d includes a back pressure control section $C_6$, a back pressure control solenoid (SOL) drive signal generating section $C_7$, and a back pressure control solenoid abnormality judging section $C_8$. Further, the lock-up control signal output section 103e includes a lock-up pressure control section $C_9$, a lock-up solenoid drive signal generating section $C_{10}$, and a lock-up solenoid abnormality judging section $C_{11}$.

Subsequently, a description will be given of the operation of the ECU 103.

The manual speed change operation detecting section $A_0$ detects the operating state of the manual speed change operating unit 109 in accordance with the operation signal T from the manual speed change operating unit 109. The motor rotational speed calculating section $A_1$ calculates the motor revolution number MVP on the basis of the motor revolution number signal $n_m$ from the motor rotation sensor 701. The throttle opening degree detecting section $A_2$ detects a throttle opening degree e in accordance with the throttle opening degree signal θ from the throttle opening degree sensor 101. The throttle change ratio detecting section $A_3$ detects a throttle change ratio on the basis of the throttle opening degree signal θ and a period of time counted by the soft timer not shown.

The primary revolution number detecting section $A_4$ detects a primary pulley revolution number $N_p$ in accordance with the primary sheave revolution number signal $n_p$ from the primary rotation sensor 301. The secondary revolution number detecting section $A_5$ detects a secondary pulley revolution number $N_s$ in accordance with the secondary sheave revolution number signal $n_s$ from the secondary rotation sensor 302. The vehicle speed detecting section $A_6$ detects the vehicle speed v as well as the vehicle speed change ratio.

The engine speed detecting section $A_7$ detects an engine speed $N_E$ in accordance with the engine revolution number signal $n_e$ from the engine rotation sensor 102. The pattern switch detecting section $A_8$ detects the pattern of the economy mode or power mode in accordance with the pattern signal $P_s$ from the pattern switch 104. The shift position detecting section $A_9$ detects the respective shift positions of P, R, N, D, $S_H$ and $S_L$ in accordance with the shift position signal s from the shift position switch 106. The shift position change detecting section $A_{10}$ detects a shift position change ratio.

The brake signal detecting section $A_{11}$ detects a brake operating state in accordance with the brake signal b from the brake signal detection unit 108. The battery voltage detecting section $A_{12}$ detects a battery state (not shown) in accordance with the battery voltage signal $V_{at}$ from the battery voltage sensor 114. The motor current detecting section $A_{13}$ detects current supplied to the CVT speed change motor 7 in accordance with the motor current signal $i_m$ from the motor current sensor 115. The oil temperature detecting section $A_{14}$ detects a temperature of the working oil within the non-stage transmission in accordance with the oil temperature signal t from the oil temperature sensor 209. The steering angle detecting section $A_{15}$ detects the steering angle of the steering 121 in accordance with the steering angle signal $i_2$ from the steering angle sensor 111. The lateral acceleration detecting section $A_{16}$ detects a lateral acceleration which is given to the vehicle in accordance with the lateral acceleration signal $i_1$ from the lateral acceleration sensor 112.

In the operation section 103b, the acceleration request judging section $B_1$ makes a predetermined judgement on the basis of the throttle opening degree θ from the throttle opening degree detecting section $A_2$, the throttle change ratio from the throttle change ratio detecting section $A_3$, and the vehicle speed v as well as the vehicle speed change ratio from the vehicle speed detecting section $A_6$, to thereby output the judgement result to the automatic (best fuel consumption, maximum motive force)/manual judging section $B_3$.

The actual torque ratio calculating section $B_2$ calculates a present actual torque ratio (hereinafter referred to as "actual torque ratio") on the basis of the primary pulley revolution number $N_p$ from the primary revolution number detecting section $A_4$ and the secondary pulley revolution number $N_s$ from the secondary revolution number detecting section $A_5$, to output the calculation results to the CVT speed change judging section $B_5$.

Then, the automatic (best fuel consumption, maximum motive force)/manual judging section $B_3$ judges whether the non-stage transmission is in the automatic speed change mode or in the manual speed change mode on the basis of the operating state of the manual speed change operating unit 109 from the manual speed change operation detecting section $A_0$, the judging result from the acceleration request judging section $B_1$, the pattern from the pattern switch detecting section $A_8$, and the shift position from the shift position detecting section $A_9$. When the non-stage transmission is in the automatic speed change mode, the automatic/manual judging section $B_3$ judges whether the non-stage transmission is to be controlled in accordance with the best fuel consumption characteristic or the maximum motive force characteristic, to output the judgement result to the desired torque ratio upper/lower limit calculating section $B_4$.

The desired torque ratio upper/lower limit calculating section $B_4$, when the judgement result from the automatic (best fuel consumption, maximum motive force)/manual judging section $B_3$ is the automatic speed change mode, calculates an upper limit value $T^*_{max}$ and lower limit value $T^*_{min}$ of the desired torque ratio on the basis of the throttle opening degree e from the throttle opening degree detecting section $A_2$, the vehicle speed v and vehicle speed change ratio from the vehicle speed detecting section $A_6$, the steering angle from the steering angle detecting section $A_{15}$, and the lateral acceleration from the lateral acceleration detecting section $A_{16}$, to output the upper limit value $T^*_{max}$ and lower value $T^*_{min}$ to the CVT speed change judging section $B_5$. When the judgement result from the automatic (best fuel consumption, maximum motive force)/manual judging section $B_3$ is the manual speed change mode, the desired torque ratio upper/lower limit calculating section $B_4$ does not calculate the upper limit value $T^*_{max}$ and lower value $T^*_{min}$ of the desired torque ratio.

The CVT speed change judging section $B_5$ judges whether the torque ratio set in the non-stage gear shifter 3 as a speed change condition is to be changed or not on the basis of the operating state of the manual speed change operating unit 109 from the manual speed change operation detecting section $A_0$, the upper limit value $T^*_{max}$ and lower value $T^*_{min}$ of the desired torque ratio from the desired torque ratio upper/lower limit calculating section $B_4$, the abnormality detection signal from the motor abnormality detecting section $C_2$, the actual torque ratio $T_p$ from the actual torque ratio calculating section $B_2$, the shift position from the shift position detecting section $A_9$, the throttle opening degree θ from the throttle opening degree detecting section $A_2$, and the vehicle speed v as well as the vehicle speed change ratio from the vehicle speed detecting section $A_6$. The CVT speed change judging section $B_5$ also outputs the speed change signal in the case where the torque ratio is changed, to the CVT change speed calculating section $B_6$, the driver drive signal generating section $C_3$, and the motor brake drive signal generating section $C_4$, respectively.

The CVT change speed calculating section $B_6$ calculates the change speed of the non-stage gear shifter 3 for realizing feeling requested at this time on the basis of the judgement result from the CVT speed change judging section B5, the operating state of the manual speed change operating unit 109 from the manual speed change operation detecting section $A_0$, the throttle change ratio from the throttle change ratio detecting section $A_3$, and the vehicle speed v as well as the vehicle speed change ratio from the vehicle speed detecting section $A_6$, the shift position from the shift position detecting section $A_9$, the shift position change ratio from the shift position change detecting section $A_{10}$, and the brake operating state from the brake signal detecting section $A_{11}$, to output the change speed to the speed change motor control section $C_1$.

In the control signal output section 103c, the speed change motor control unit $C_1$ generates a speed change command signal on the basis of the motor revolution number MVP from the motor rotation speed calculating section $A_1$, the battery state from the battery voltage detecting section $A_{12}$, and the change speed from the CVT change speed calculating section $B_6$ to output the speed change command signal to the driver drive signal generating section $C_3$. In the driver drive signal generating section $C_3$, the motor rotational direction and the motor drive voltage are controlled for performing the speed change of the non-stage gear shifter 3, which is requested by the speed change command signal.

The motor abnormality detecting section $C_2$ detects the abnormality such as the over-current of the CVT speed change motor 7, the saturation of the motor speed or the lock state, to output the motor abnormality detection signal to the CVT speed change judging section $B_5$.

The driver drive signal generating section $C_3$, when a speed change command is given to the CVT speed change motor 7, generates the CVT speed change motor control signal m on the basis of the speed change command signal from the speed change motor control section $C_1$ and the speed change signal from the CVT speed change judging section $B_5$, to thereby change the duty ratio of a signal inputted to the motor drive driver (not shown) of the CVT speed change motor 7.

The motor brake drive signal generating section $C_4$, when a speed change command is given to the CVT speed change motor 7, generates the motor holding brake signal $b_m$ on the basis of the speed change signal from the CVT speed change judging section $B_5$ to release the motor holding brake 7d. The motor holding brake signal $b_m$ is also outputted to the motor brake abnormality judging section $C_5$.

The motor brake abnormality judging section $C_5$ monitors the brake operating voltage on the basis of the motor holding brake signal $b_m$ from the motor brake drive signal generating section $C_4$ to detect the abnormality such as the disconnection or short-circuit in a wiring system, and outputs the motor brake abnormality detection signal to the motor abnormality detecting section $C_2$.

In the back pressure control signal output section 103d, the back pressure control section $C_6$ outputs the control signal to the back pressure control solenoid drive signal generating section $C_7$ in order to control the shift feeling at the time of changing over from N to D, and from N to R, on the basis of the throttle opening degree θ from the throttle opening degree detecting section $A_2$, the shift position from the shift position detecting section $A_9$, the shift position change ratio from the shift position change detecting section $A_{10}$, the oil temperature of working oil from the oil temperature detecting section $A_{14}$, and the back pressure control solenoid abnormality detection signal from the back pressure control solenoid abnormality judging section $C_8$.

The back pressure control solenoid drive signal generating section $C_7$ outputs the back pressure control solenoid drive signal $P_b$ to the back pressure control solenoid 93a and the back pressure control solenoid abnormality judging section $C_8$ on the basis of the control signal from the back pressure control section $C_6$.

The back pressure control solenoid abnormality judging section $C_8$ detects the abnormality such as the short-circuit or disconnection of the back pressure control solenoid 93a on the basis of the back pressure control solenoid drive signal $P_b$ from the back pressure control solenoid drive signal generating section $C_7$, to output the back pressure control solenoid abnormality detection signal to the back pressure control section $C_6$.

In the lock-up control signal output section 103e, the lock-up pressure control section $C_9$ selects the lock state, the free state or the duty control state of the lock-up clutch 11 on the basis of the throttle opening degree θ from the throttle opening degree detecting section $A_2$, the primary pulley revolution number $N_p$ from the primary revolution number detecting section $A_4$, the engine speed $N_E$ from the engine speed detecting section $A_7$, the oil temperature of working oil from the oil temperature detecting section $A_{14}$, and the lock-up solenoid abnormality detection signal from the lock-up solenoid abnormality judging section $C_{11}$, to output the selection result to the lock-up solenoid drive signal generating section $C_{10}$.

The lock-up solenoid drive signal generating section $C_{10}$ outputs the lock-up solenoid drive signal $P_t$ to the lock-up solenoid 95a as well as the lock-up solenoid abnormality judging section $C_{11}$ on the basis of the selection result from the lock-up pressure control section $C_9$.

The lock-up solenoid abnormality judging section $C_{11}$ detects the abnormality such as the short-circuit or disconnection of the lock-up solenoid 95a on the basis of the lock-up solenoid drive signal $P_t$ from the lock-up solenoid drive signal generating section $C_{10}$ to output the lock-up solenoid abnormality detection signal to the lock-up pressure control section $C_9$.

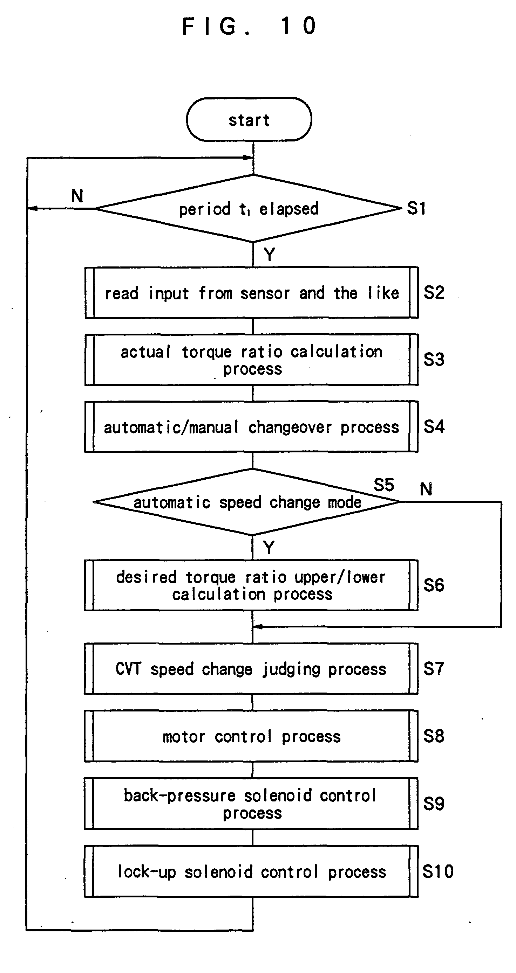

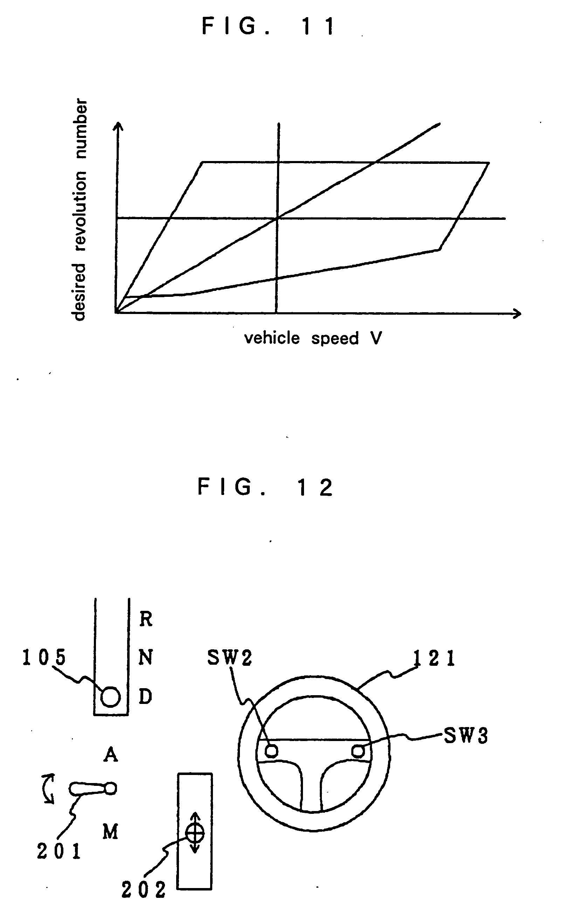

Fig. 10 is a main flowchart showing the operation of the control apparatus for a vehicle transmission in accordance with the first embodiment of the present invention, and Fig. 11 is a graph showing a desired torque ratio upper/lower limit calculation map in accordance with the first embodiment of the present invention. In Fig. 11, the axis of abscissa represents a vehicle speed v whereas the axis of ordinate represents a desired revolution number.

In Step S1, waiting until a period of time tl is elapsed is made.

In Step S2, reading processing such as inputting from each sensor is executed. In this case, an input from the sensor is read in as a digital value which can be processed by the ECU 103 (Fig. 5).

In Step S3, the calculation processing of the actual torque ratio $T_p$ is executed. In this case, the actual torque ratio $T_p$ is a torque ratio calculated on the basis of the primary revolution number $N_p$ and the secondary revolution number $N_s$.

$$T_p = N_p / N_s$$

In Step S4, the automatic/manual change-over processing is executed on the basis of the operation signal T generated by operating the manual speed change operating unit 109 by a driver.

In Step S5, it is judged whether it is an automatic speed change mode or not. If it is the automatic speed change mode, the processing is advanced to Step S6. If it is a manual speed change mode, the processing is advanced to Step S7.

In Step S6, the desired torque ratio upper/lower limit calculation processing is executed. In this case, the upper and lower limit values of the desired revolution number are obtained on the basis of the throttle opening degree θ, the vehicle speed v, the steering angle of the steering 121 and the lateral acceleration, and referring to the desired torque ratio upper and lower limit calculation map shown in Fig. 11, the upper limit value $T^*_{max}$ and the lower limit value $T^*_{min}$ of the desired torque ratio are calculated.

In Step S7, the CVT speed change judging process is executed. In this case, it is judged whether or not the torque ratio of the non-stage gear shifter 3 (Fig. 6) is to be changed on the basis of the operating state of the manual speed change operating unit 109, the upper limit value $T^*_{max}$ and lower limit value $T^*_{min}$ of the desired torque ratio, the detection result of the motor abnormality detecting section $C_2$ (Fig. 9), the actual torque ratio $T_p$, the shift position, the throttle opening degree θ and the vehicle speed v. If the torque ratio is to be changed, it is judged to what degree the speed change is made in the up-shift direction or down-shift direction.

In Step S8, the motor control process is executed. In this case, the CVT speed change motor 7 is driven on the basis of the present motor revolution number MVP or battery voltage $V_p$ so as to achieve the change speed calculated by the CVT speed change judging process.

In Step S9, the back pressure solenoid control process is executed. In this case, the back pressure control solenoid 93a of the accumulator not shown is controlled on the basis of the throttle opening degree θ, the shift position and the oil temperature of working oil.

In Step S10, the lock-up solenoid control process is executed. In this case, the lock-up solenoid 95a is controlled on the basis of the primary revolution number $N_p$, the engine speed $N_E$, the throttle opening degree e, and the oil temperature of working oil.

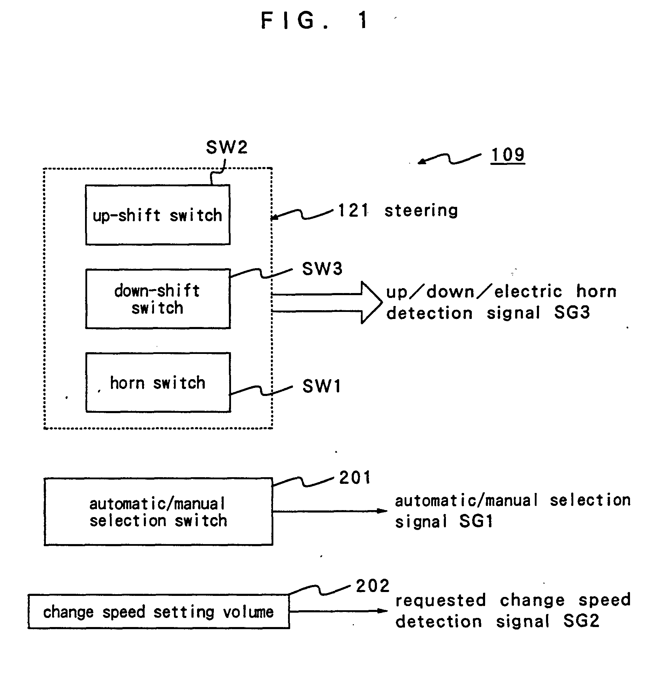

Subsequently, a description will be given of the automatic/manual change-over process, with reference to Figs. 1 and 12 to 15.

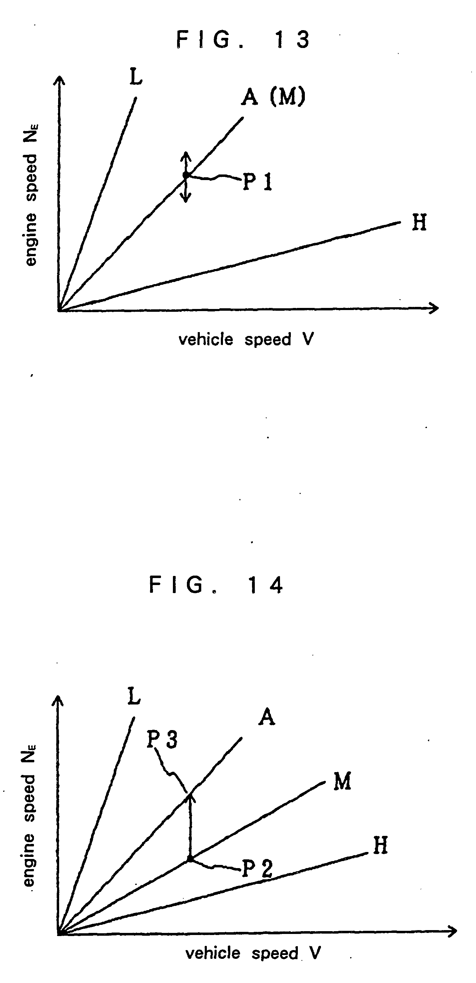

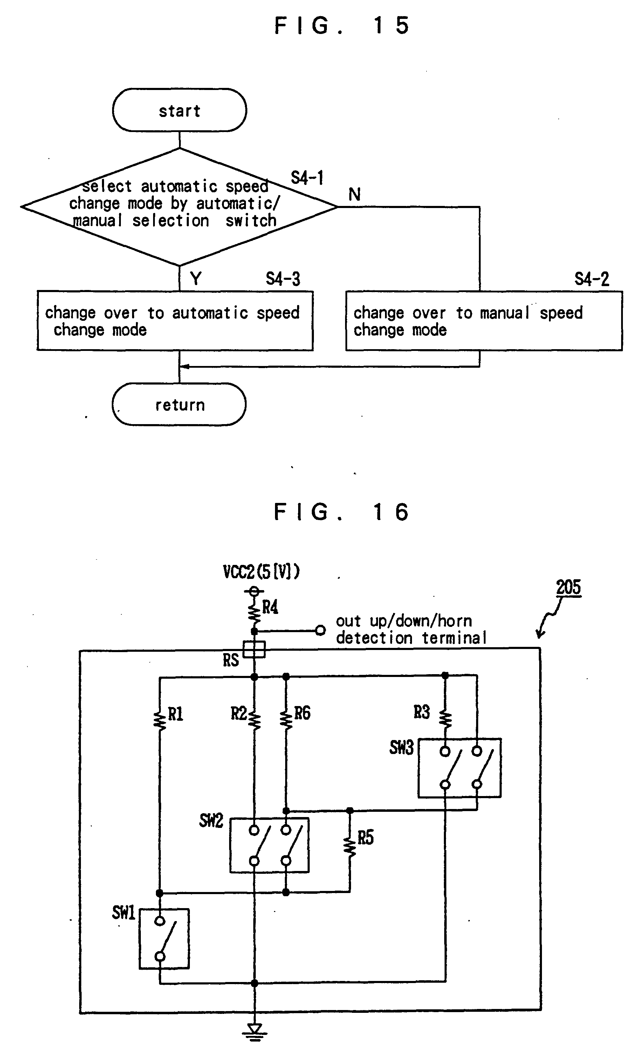

Fig. 1 is a block diagram showing the manual speed change operating unit in accordance with the first embodiment of the present invention. Fig. 12 is a conceptual diagram showing the manual speed change operating unit in accordance with the first embodiment of the present invention. Fig. 13 is a graph showing a state where the automatic speed change mode is changed over to the manual speed change mode in accordance with the first embodiment of the present invention. Fig. 14 is a graph showing a state where the manual speed change mode is changed over to the automatic speed change mode in accordance with the first embodiment of the present invention. Fig. 15 is a flowchart showing the operation of the automatic/manual change-over process in accordance with the first embodiment of the present invention. In Figs. 13 and 14, the axis of abscissa represents a vehicle speed v whereas the axis of ordinate represents an engine speed $N_E$.

As shown in Figs. 1 and 12, the manual speed change operating unit 109 includes an automatic/manual selection switch 201, a change speed setting volume 202, as well as an up-shift switch SW2 and down-shift switch SW3 arranged on the steering 121. The automatic/manual selection signal SG1 is outputted from the automatic/manual selection switch 201, the request change speed detection signal SG2 is outputted from the change speed setting volume 202, and the up/down/horn detection signal SG3 is outputted from the steering 121, as the operating signals T.

The automatic manual selection switch 201 is arranged, for example, on a console not shown or the like, and manipulated so as to be located at a position A for selection of the automatic speed change mode, and at a position M for selecting the manual speed change mode.

Also, there is arranged speed change condition holding means not shown so that, when the automatic speed change mode is changed over to the manual speed change mode, the torque ratio in the automatic speed change mode immediately before changing over is set also in the manual speed change mode as it is. For example, if the automatic speed change mode (A) changes over to the manual speed change mode (M) at a point P1 shown in Fig. 13, the torque ratio at the same point P1 is set in the manual speed change mode, similarly.

Subsequently, upon depression of one of the up-shift switch SW2 and the down-shift switch SW3, the up/down/horn detection signal SG3 is produced, and the torque ratio can be changed at a high-speed (H) side or at a low-speed (L) side as indicated by arrows in Fig. 13. If the up-shift switch SW2 and the down-shift switch SW3 are continuously depressed to make an operating period of time as an operating amount elongated, then the torque ratio is changed at the high-speed side or at the low-speed side every control cycle period of the automatic/manual change-over process.

Therefore, in the case where the driver does not depress any one of the up-shift switch SW2 and the down-shift switch SW3, the speed change is not executed. Only in the case where the driver depresses one of the up-shift switch SW2 and the down-shift switch SW3, the speed change is executed. Hence, the speed change of the up-shift or down-shift is started simultaneously when the up-shift operation or the down-shift operation is started. The speed change of the up-shift or down-shift is completed simultaneously when the up-shift operation or the down-shift operation is completed.

As a result, the torque ratio desired by the driver can be set surely and rapidly, and the driver does not feel discordant.

Also, the speed change of the up-shift is executed in association with the operating period of the up-shift operation, and the speed change of the down-shift is executed in association with the operating period of the down-shift operation. This makes it unnecessary to repeatedly depress the up-shift switch SW2 and the down-shift switch SW3.

The change speed setting volume 202 is disposed so as to set the change speed by allowing the change speed setting volume 202 to be slid in the direction indicated by the arrows in Fig. 12. The change speed is produced as the request change speed detection signal SG2.

On the other hand, in the case where the manual speed change mode is changed over to the automatic speed change mode, the torque ratio calculated through the desired torque ratio upper and lower limit calculation process is set with change-over. For example, if the manual speed change mode is changed over to the automatic speed change mode at a point P2 of Fig. 14, the torque ratio at a point P3 is set in the automatic speed change mode.

As described above, the change-over from the automatic speed change mode to the manual speed change mode, as well as the change-over from the manual speed change mode to the automatic speed change mode can be smoothly executed so that the driver does not feel discordant. Also, the operation of the manual speed change operating unit 109 for changing-over is facilitated. Furthermore, the torque ratio holding function can be given to the manual speed change operating unit 109 by changing over from the automatic speed change mode to the manual speed change mode.

In this embodiment, the automatic/manual selection switch 201 is arranged on the console or the like, but may alternatively been provided on the steering 121. In this case, the operation of manual speed change operating unit 109 is further facilitated. Referent numeral 5 denotes a shift lever.

Conversely, the up-shift switch SW2 and the down-shift switch SW3 can be arranged on the console or the like.

Next, a description will be given of a flowchart showing the operation of the automatic/manual change-over process.

In Step S4-1, it is judged whether the automatic/manual selection switch 201 selects the automatic speed change mode, or not. In the case where the automatic/manual selection switch 201 selects the automatic speed change mode, the processing is advanced to Step S4-3. In the case where the automatic/manual selection switch 201 selects the manual speed change mode, the processing is advanced to Step S4-2.

In Step S4-2, the automatic/manual selection switch 201 is changed over to the manual speed change mode.

In Step S4-3, the automatic/manual selection switch is changed over to the automatic speed change mode.

Subsequently, a description will be given of a switch mechanism of the steering 121, with reference to Figs. 16 to 21.

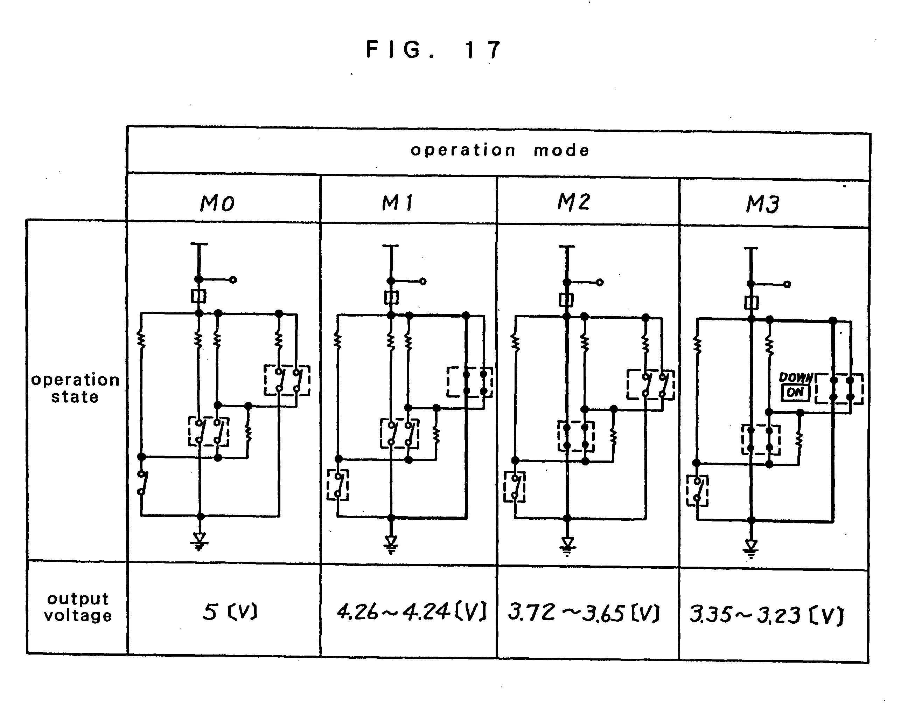

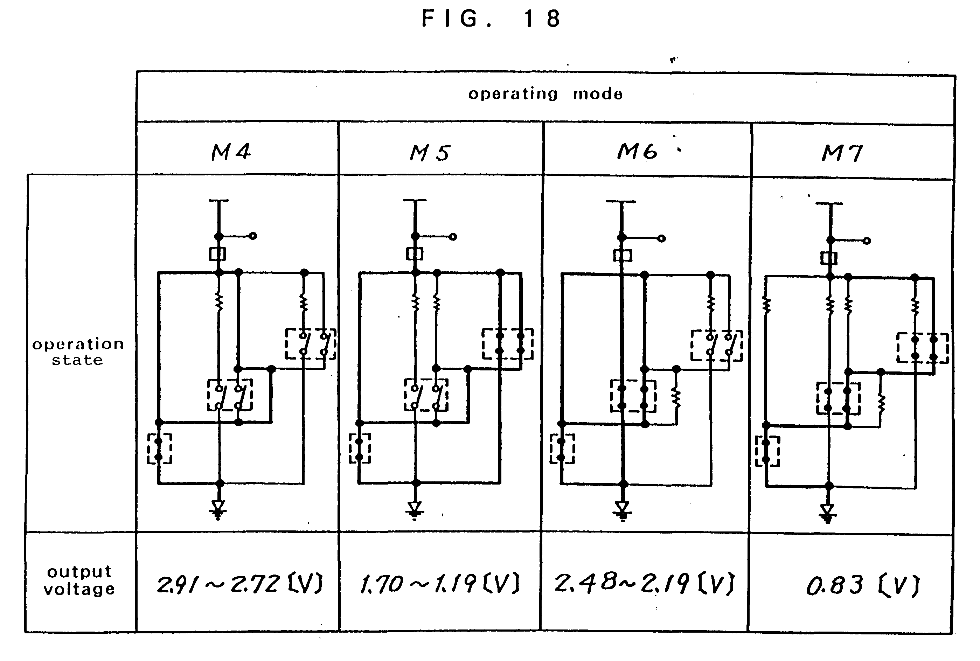

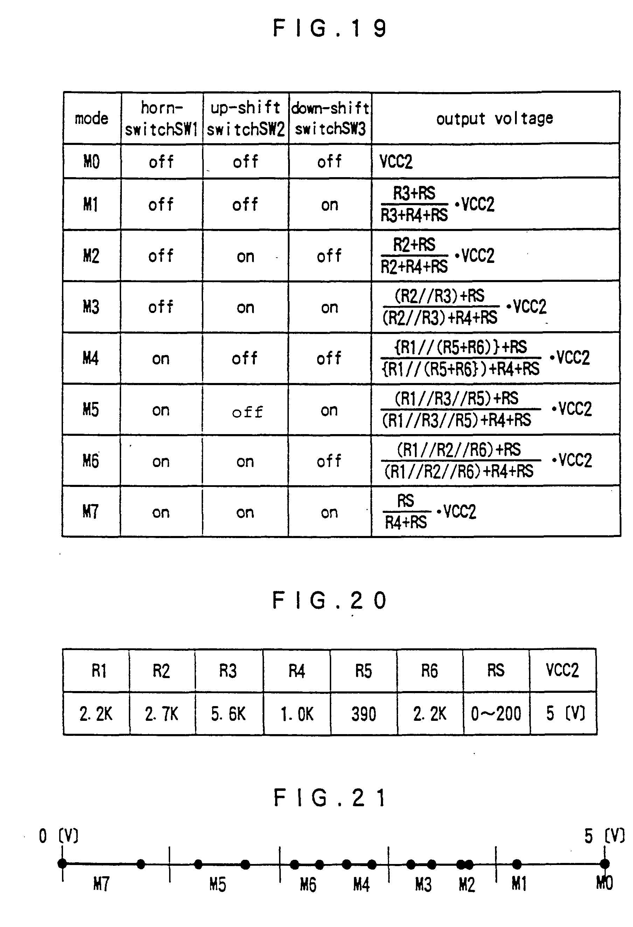

Fig. 16 is a circuit diagram showing a switch circuit in accordance with the first embodiment of the invention. Fig. 17 is a diagram showing a first operation mode of the switch circuit in accordance with the first embodiment of the present invention. Fig. 18 is a diagram showing a second operation mode of the switch circuit in accordance with the first embodiment of the present invention. Fig. 19 is a table illustrating an output voltage of the switch circuit in accordance with the first embodiment of the present invention. Fig. 20 is a diagram showing an example of elements in the switch circuit in accordance with the first embodiment of the present invention. Fig. 21 is a diagram showing a distribution of output voltage of the switch circuit in accordance with the first embodiment of the present invention.

As shown in Fig. 16, a switch circuit 205 is connected to a power supply VCC 2 of 5 V through a pull-up resistor R4. An up/down/horn detection terminal OUT is formed between the resistor R4 and a slip ring RS so that an up/down/horn detection signal SG3 is outputted to the up/down/horn detection terminal OUT.

The switch circuit 205, as shown in Fig. 16, includes a horn switch SW1 for rumbling the horn other than the up-shift switch SW2 and the down-shift switch SW3. The respective switches SW1 to SW3 are connected to each other through resistors R1 to R3, R5 and R6. Hence, the single up/down/horn detection signal SG3 allows not only the speed changes of the up-shift and down-shift to be execute, but also the horn to be rumbled.

For the above executions, the switch circuit 205 is actuated by eight operation modes M0 to M7 as shown in Figs. 17 and 18, and the up/down/horn detection signal SG3 has output voltages different every each of the operation modes M0 to M7.

In the respective operation modes M0 to M7, the switches SW1 to SW3 are turned on/off as shown in Fig. 19, thereby changing the output voltage. The values of the resistors R1 to R6 and the resistant value of the slip ring RS are set as shown in Fig. 20, and the distribution of the output voltage is shown in Fig. 21.

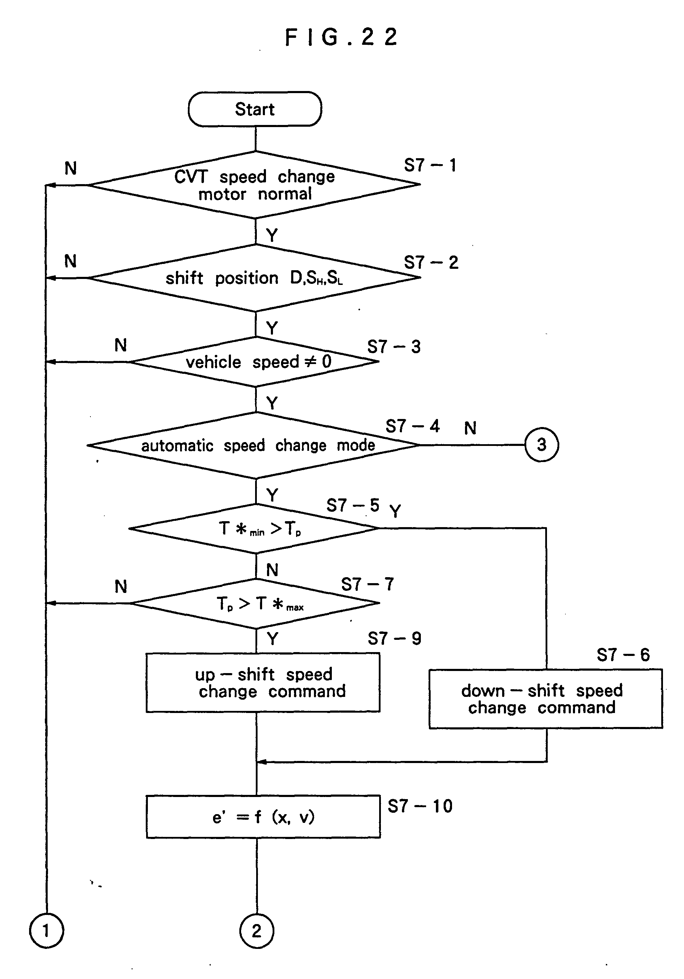

Next, a description will be given of a process of judging the CVT speed change made by the CVT speed change judging section $B_5$ with reference to Figs. 22 to 24.

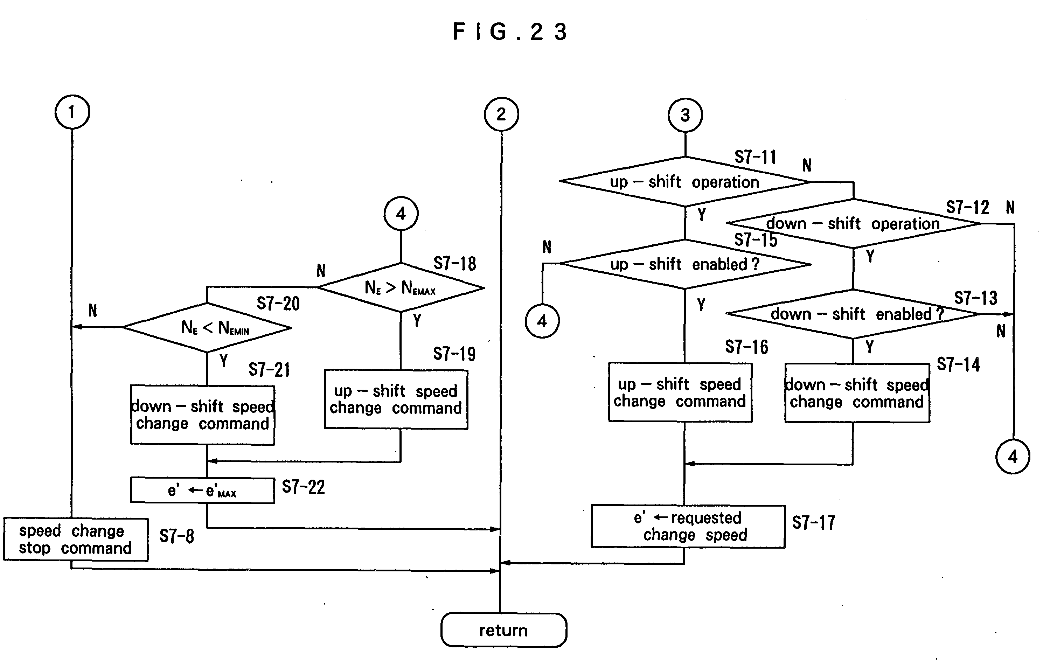

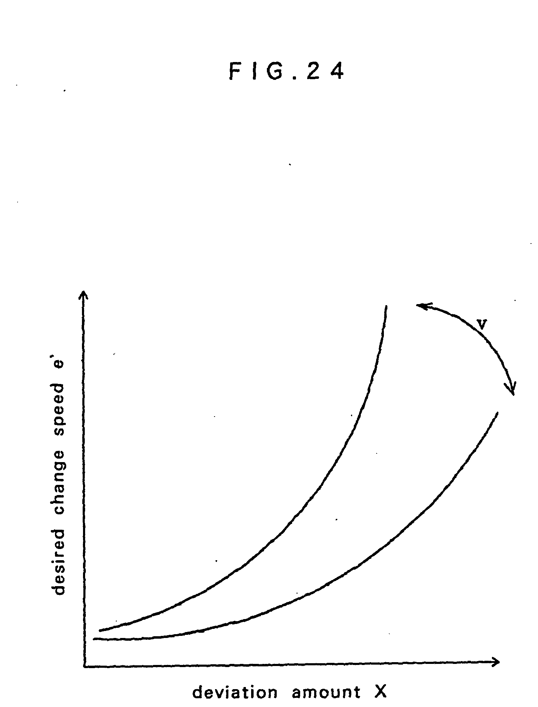

Fig. 22 is a first flowchart showing the CVT speed change judging process in accordance with the first embodiment of the present invention. Fig. 23 is a second flowchart of the CVT speed change judging process in accordance with the first embodiment of the present invention. Fig. 24 is a graph illustrating a desired change speed map in accordance with the first embodiment of the present invention. In Fig. 24, the axis of abscissa represents a deviation amount x whereas the axis of ordinate represents a desired change speed e'.

In the example, the speed change operation is stopped when any of the following conditions is satisfied.

In other words, the speed change operation is stopped in any case where the CVT speed change motor 7 is abnormal, the shift position is P, R or N, where the vehicle speed v is 0, where the actual torque ratio $T_p$ is between the upper limit value $T^*_{max}$ and the lower limit value $T^*_{min}$ of the desired torque ratio in the automatic speed change mode, where the down-shift operation has been executed when the actual torque ratio $T_p$ is the maximum torque ratio in the manual speed change mode, where the up-shift operation has been executed when the actual torque ratio $T_p$ is the minimum torque ratio in the manual speed change mode, or where no operation is executed in the manual speed change mode.

Hence, in the automatic speed change mode, in the case where the CVT speed change motor 7 is normal, the shift position is D, $S_H$ or $S_L$, the vehicle speed v is higher than 0, and the actual torque ratio $T_P$ is not between the upper limit value $T^*_{max}$ and the lower limit value $T^*_{min}$ of the actual torque ratio in the automatic speed change mode, the speed change command of the up-shift or down-shift is issued, and the desired speed change speed e' is set in accordance with f(x,v) on the basis of the deviation amount x between the desired torque ratio and the actual torque ratio $T_p$ as well as the present vehicle speed v, referring to the desired change speed map shown in Fig. 24.

On the other hand, in the manual speed change mode, in the case where the up-shift operation has been executed, when the speed change of the up-shift is enabled, a speed change command for the up-shift is issued. In the case where the down-shift operation has been executed, when the speed change of the down-shift is enabled, a speed change command for the down-shift is issued. Moreover, with the up-shift operation as well as the down-shift operation, a requested change speed detected by the manual speed change operating unit 109 is set as the desired change speed e'.

In Step S7-1, it is judged whether the CVT speed change motor 7 is normal or not. If the CVT speed change motor 7 is normal, the processing is advanced to Step S7-2, whereas if the CVT speed change motor 7 is abnormal, the processing is advanced to Step S7-8.

In Step S7-2, it is judged whether the shift position is one of D, $S_H$ and $S_L$, or not. If the shift position is D, $S_H$ or $S_L$, then the processing is advanced to Step S7-3. If the shift position is P, R or N, the processing is advanced to Step S7-8.

In Step S7-3, it is judged whether the vehicle speed v is 0 or not. If the vehicle speed v is 0, the processing is advanced to Step S7-8. If the vehicle speed v is higher than 0, the processing is advanced to Step S7-4.

In Step S7-4, it is judged whether the mode is the automatic speed change mode or not. If it is the automatic speed change mode, the processing is advanced to Step S7-5. If it is the manual speed change mode, the processing is advanced to Step S7-11.

In Step S7-5, it is judged whether the lower limit value $T^*_{min}$ of the desired torque ratio is larger than the actual torque ratio $T_p$, or not. If the lower limit value $T^*_{min}$ of the desired torque ratio is larger than the actual torque ratio $T_p$, the processing is advanced to Step S7-6. If the lower limit value $T^*_{min}$ of the desired torque ratio is equal to ore smaller than the actual torque ratio $T_p$, the processing is advanced to Step S7-7.

In Step S7-6, the speed change command for the down-shift is issued.

In Step S7-7, it is judged whether the actual torque ratio $T_p$ is larger than the upper limit value $T^*_{max}$ of the desired torque ratio, or not. If the actual torque ratio $T_p$ is larger than the upper limit value $T^*_{max}$ of the desired torque ratio, the processing is advanced to Step 7-9. If the actual torque ratio $T_p$ is equal to or smaller than the upper limit value $T^*_{max}$ of the desired torque ratio, the processing is advanced to Step 7-8.

In Step S7-8, a speed change stop command is issued.

In Step S7-9, a speed change command for the up-shift is issued.

In Step S7-10, a desired change speed e' is calculated.

$$e' = f(x, v)$$

In Step S7-11, it is judged whether the up-shift operation has been executed on the basis of the output voltage of the up/down/horn detection signal SG3 (Fig. 1), or not. If the up-shift operation has been executed, the processing is advanced to Step S7-15. If the up-shift operation has not been executed, the processing is advanced to Step S7-12.

In Step S7-12, it is judged whether the down-shift operation has been executed on the basis of the output voltage of the up/down/horn detection signal SG3, or not. If the down-shift operation has been executed, the processing is advanced to Step S7-13. If the down-shift operation has not been executed, the processing is advanced to Step S7-18.

In Step S7-13, it is judged whether the speed change for the down-shift is enabled or not in accordance with the mechanical limit (over-revolution or the like) of the engine 100, the mechanical limit of the non-stage gear shifter 3, or the like. If the speed change of the down-shift is enabled, the processing is advanced to Step S7-14. If the speed change of the down-shift is not enabled, the processing is advanced to Step S7-18.

In Step S7-14, a speed change command of the down-shift is issued.

In Step S7-15, it is judged whether the speed change of the up-shift is enabled or not in accordance with the mechanical limit (engine stop, knocking or the like) of the engine 100, the mechanical limit of the non-stage gear shifter 3, or the like. If the speed change for the up-shift is enabled, the processing is advanced to Step S7-16. If the speed change of the up-shift is not enabled, the processing is advanced to Step S7-18.

In Step S7-16, a speed change command for the up-shift is issued.

In Step S7-17, a requested change speed detected by the manual speed change operating unit 109 is set as a desired change speed e'.

In Step S7-18, it is judged whether the present engine speed $N_E$ is larger than an allowable maximum engine speed $N_{EMAX}$, or not. If the present engine speed $N_E$ is larger than the allowable maximum engine speed $N_{EMAX}$, the processing is advanced to Step S7-19. If the present engine speed $N_E$ is equal to or smaller than the allowable maximum engine speed $N_{EMAX}$, the processing is advanced to Step S7-20.

In Step S7-19, the speed change command for the up-shift is issued so that the over-revolution is prevented from occurring.

In Step S7-20, it is judged whether the present engine speed $N_E$ is smaller than an allowable minimum engine speed $N_{EMIN}$, or not. If the present engine speed $N_E$ is smaller than the allowable minimum engine speed $N_{EMIN}$, the processing is advanced to Step S7-21. If the present engine speed $N_E$ is equal to or larger than the allowable minimum engine speed $N_{EMIN}$, the processing is advanced to Step S7-8.

In Step S7-21, the speed change command for the down-shift is issued so that the engine stop, knocking or the like is prevented from occurring.

In Step S7-22, the maximum change speed $e'_{MAX}$ is set as the desired change speed e', and the speed change is executed immediately.

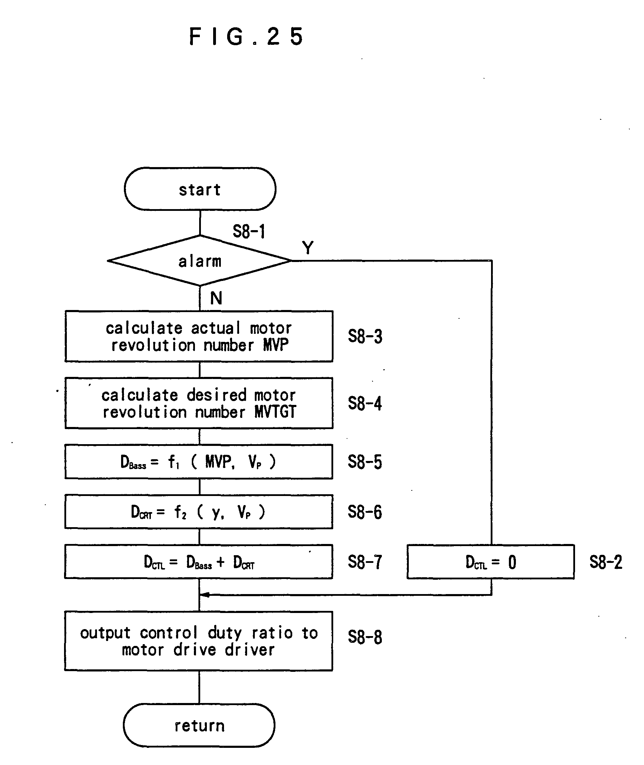

Subsequently, a description will be given of the motor control process with reference to Figs. 25 to 28.

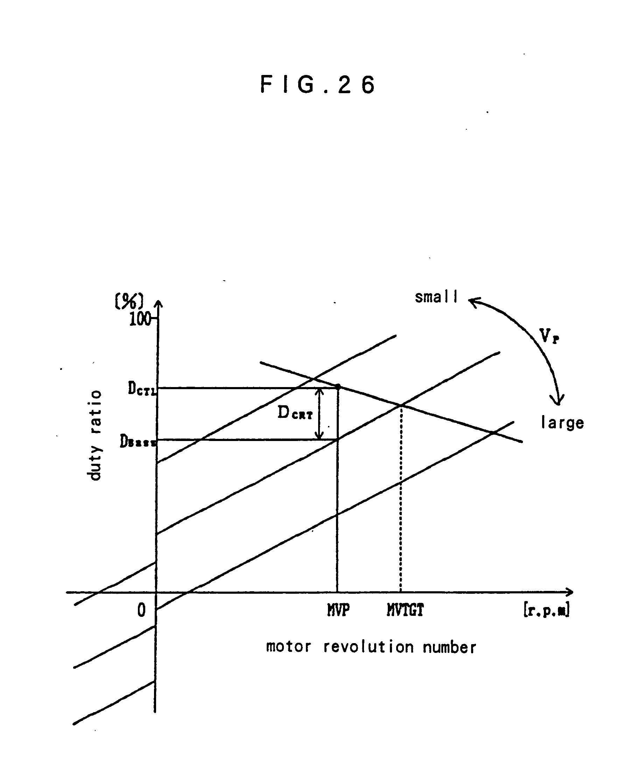

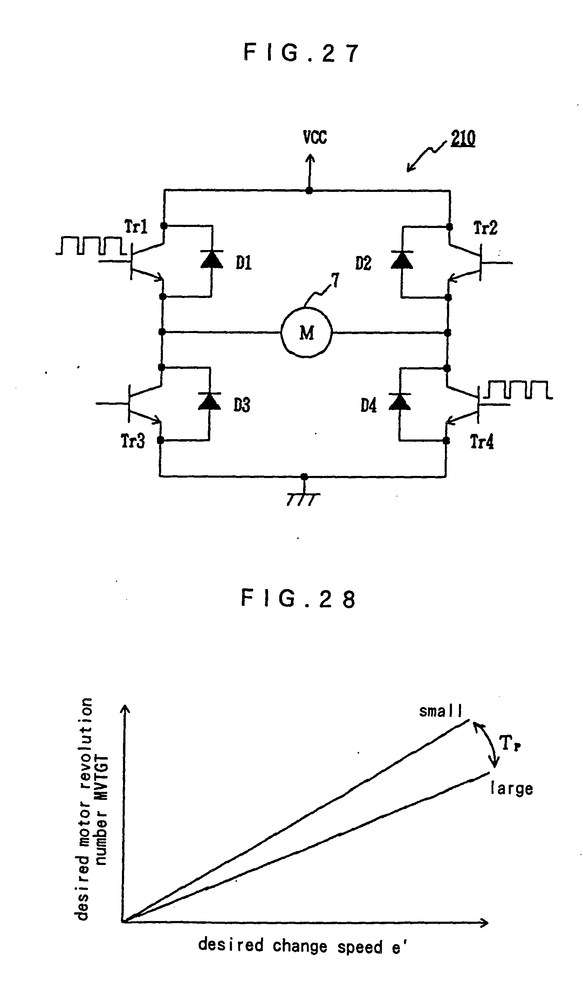

Fig. 25 is a flowchart showing the motor control process in accordance with the first embodiment of the present invention. Fig. 26 is a graph showing a duty ratio map in accordance with the first embodiment of the present invention. Fig. 27 is a circuit diagram showing the motor drive driver in accordance with the first embodiment of the present invention. Fig. 28 is a graph showing a desired motor revolution number map in accordance with the first embodiment of the present invention. In Fig. 26, the axis of abscissa represents a motor revolution number whereas the axis of ordinate represents a duty ratio. In Fig. 28, the axis of abscissa represents a desired change speed e' whereas the axis of ordinate represents desired motor revolution number MVTGT.

In Step S8-1, it is judged whether an alarm is outputted or not. If the alarm is outputted, the processing is advanced to Step S8-2. If the alarm is not outputted, the processing is advanced to Step S8-3.

In Step S8-2, "0" is set for a control duty ratio $D_{CTL}$.

$$D_{CTL} = 0$$

In Step S8-3, an actual motor revolution number MVP is calculated in accordance with an input from the motor revolution number sensor 701.

In Step S8-4, a desired motor revolution number MVTGT is calculated in accordance with the desired change speed e' and the actual torque ratio $T_p$.

In Step S8-5, a basic duty ratio $D_{Bass}$ is calculated on the basis of the actual motor revolution number MVP and the actual battery voltage $V_p$, referring to the duty ratio map shown in Fig. 26

$$D_{Bass} = f1 \ (MVP, \ V_p)$$

In Step S8-6, a correction duty ratio $D_{CRT}$ is calculated on the basis of a difference y in revolution number obtained by subtracting the actual motor revolution number MVP from the desired motor revolution number MVTGT, and the actual battery voltage $V_p$.

$$D_{CRT} = f_2 \ (y, \ V_p)$$

In Step S8-7, the control duty ratio $D_{CTL}$ is calculated.

$$D_{CTL} = D_{Bass} + D_{CRT}$$

In Step S8-8, the control duty ratio $D_{CTL}$ is outputted to the motor drive driver 210 shown in Fig. 27. The motor drive driver 210 includes a CVT speed change motor 7, four diodes D1 to D4, and four transistors Tr1 to Tr4. A signal inputted to the bases of the respective transistors Tr1 to Tr4 is controlled by the control duty ratio $D_{CTL}$.

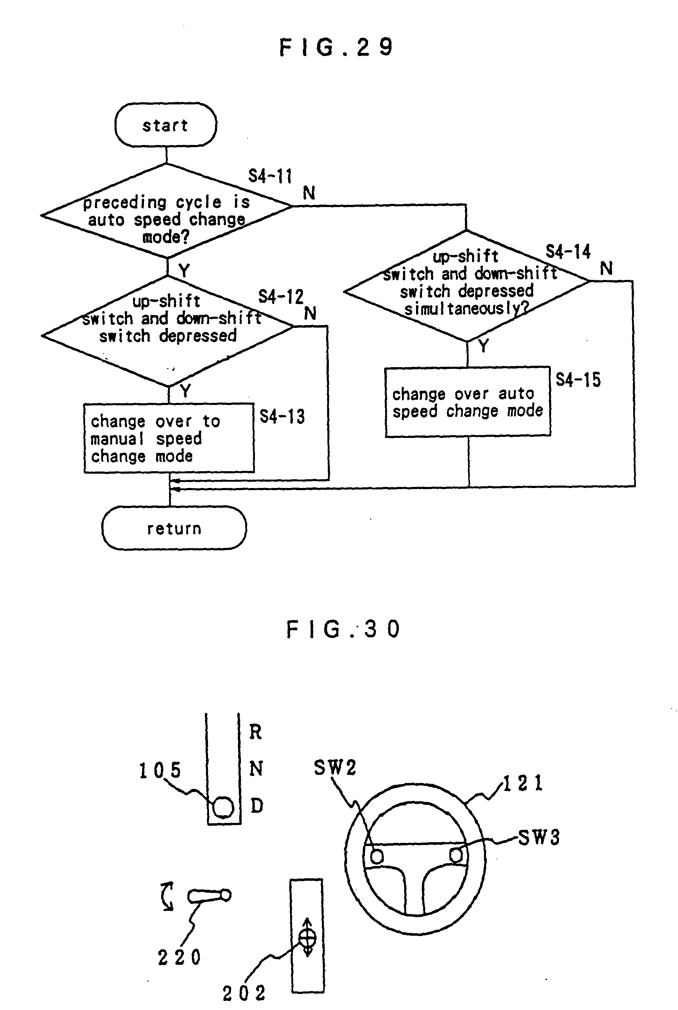

Subsequently, a description will be given of a second embodiment of the present invention with reference to Fig. 29.

Fig. 29 is a flowchart showing the automatic/manual change-over process in accordance with the second embodiment of the present invention.

In Step S4-11, it is judged whether the automatic speed change mode has been selected in the preceding cycle, or not. If the automatic speed change mode has been selected, the proceeding is advanced to Step S4-12. If the manual speed change mode has been selected, the proceeding is advanced to Step S4-14.

In Step S4-12, it is judged whether the up-shift switch SW2 (Fig. 1) or the down-shift switch SW3 has been depressed, or not. If the up-shift switch SW2 or the down-shift switch SW3 has been depressed, the processing is advanced to Step S4-13. If both of the up-shift switch SW2 and the down-shift SW3 have not been depressed, the processing is completed.

In Step S4-13, the mode is changed over to the manual speed change mode.

In Step S4-14, it is judged whether the up-shift switch SW2 (Fig. 1) and the down-shift switch SW3 have been depressed at the same time, or not. If the up-shift switch SW2 and the down-shift switch SW3 have been depressed at the same time, the processing is advanced to Step S4-15. If the up-shift switch SW2 and the down-shift SW3 have not been depressed at the same time, the processing is completed.

In Step S4-15, the mode is changed over to the automatic speed change mode.

In this case, the up-shift switch SW2 and the down-shift switch SW3 allow not only the automatic speed change mode to be changed over to the manual speed change mode, but also the manual speed change mode to be changed over to the automatic speed change mode. Therefore, the changeover can be rapidly executed, and the automatic/manual selection switch 201 becomes unnecessary, thereby facilitating the operation.

Next, a description will be given of a third embodiment of the present invention with reference to Figs. 30 to 32.

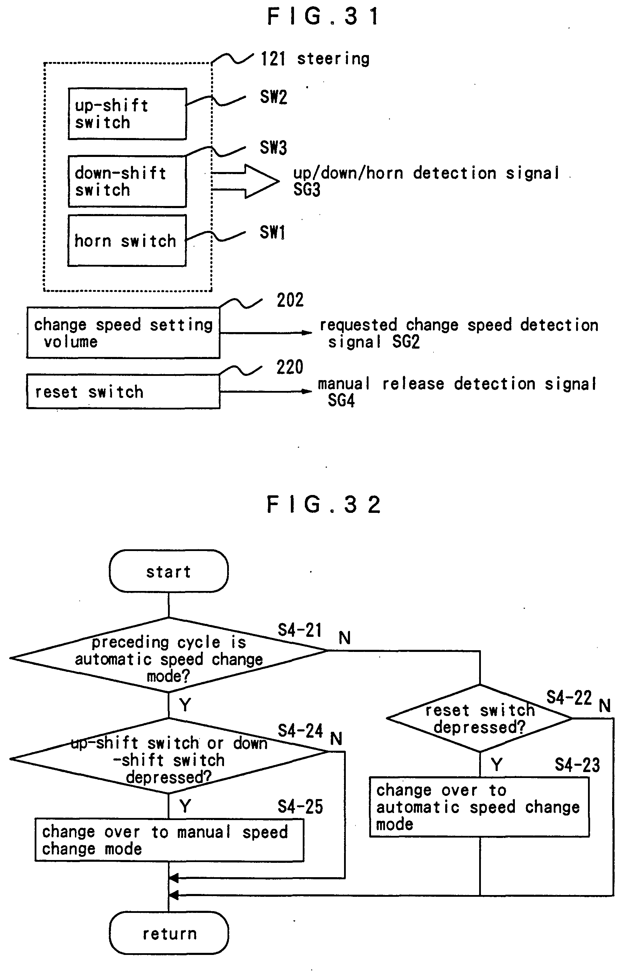

Fig. 30 is a conceptual diagram showing a manual speed change operating unit in accordance with a third embodiment of the present invention. Fig. 31 is a block diagram showing the manual speed change operating unit in accordance with the third embodiment of the present invention. Fig. 32 is a flowchart showing the automatic/manual change-over process in accordance with the third embodiment of the present invention.

As shown in the figures, the manual speed change operating unit 109 includes a reset switch 220, a change speed setting volume 202 as well as the up-shift switch SW2 and the down-shift switch SW3 disposed on the steering 121. A manual release detection signal SG4 is outputted from the reset switch 220, a requested change speed detection signal SG2 is outputted from the change speed setting volume 202, and an up/down/horn detection signal SG3 is outputted from the steering 121 as operating signal T. An SW1 is a horn switch for rumbling a horn not shown.

The reset switch 220 allows the manual speed change mode to be released for selection of the automatic speed change mode, for example, by manipulating the reset switch 220 arranged on a console not shown or the like.

In changing over from the automatic speed change mode to the manual speed change mode, one of the up-shift switch SW2 and the down-shift switch SW3 is depressed. In this case, the torque ratio in the automatic speed change mode immediately before change-over is set in the manual speed change mode as it is, and the torque ratio is changed at the high-speed side or at the low-speed side immediately.

Subsequently, one of the up-shift switch SW2 and the down-shift switch SW3 is depressed, thereby producing the up/down/horn detection signal SG3.

Then, after one of the up-shift switch SW2 and the down-shift switch SW3 is continuously depressed, the torque ratio is changed at the high-speed side or at the low-speed side every control cycle period of the automatic/manual change-over process.

A change speed setting volume 202 is arranged so that the change speed can be set by sliding the change speed setting volume 202 in the directions indicated by arrows in Fig. 30. The change speed is issued as the requested change speed detection signal SG2.

On the other hand, when the manual speed change mode is changed over to the automatic speed change mode, the reset switch 220 is manipulated. In this case, the torque ratio calculated through the desired torque ratio upper/lower limit calculating process is set for the non-stage gear shifter 3 with change-over to the automatic speed change mode.

In this manner, changing over from the automatic speed change mode to the manual speed change mode as well as changing over from the manual speed change mode to the automatic speed change mode can be smoothly executed so that the driver does not feel discordant. The operation of the manual speed change operating unit 109 for changing over is facilitated.

In this embodiment, the reset switch 220 is disposed on a console or the like. However, it may be disposed on the steering 121. In this case, the operation of the manual speed change operating unit 109 is still facilitated.

Next, a description will be given of a flowchart of the automatic/manual change-over process.

In Step S4-21, it is judged whether the automatic speed change mode has been selected in the preceding cycle, or not. If the automatic speed change mode has been selected, the processing is advanced to Step S4-24. If the manual speed change mode has been selected, the processing is advanced to Step S4-22.

In Step S4-22, it is judged whether the reset switch 220 has been manipulated, or not. If the reset switch 220 has been manipulated, the processing is advanced to Step S4-23. If the reset switch 220 has not been manipulated, the processing is completed.

In Step S4-23, the mode is changed over to the automatic speed change mode.

In Step S4-24, it is judged whether the up-shift switch SW2 or the down-shift switch SW3 has been depressed, or not. If the up-shift switch SW2 or the down-shift switch SW3 has been depressed, the processing is advanced to Step S4-25. If the up-shift switch SW2 or the down-shift switch SW3 has not been depressed, the processing is completed.

In Step S4-25, the mode is changed over to the manual speed change mode.

Subsequently, a description will be given of a fourth embodiment of the present invention.

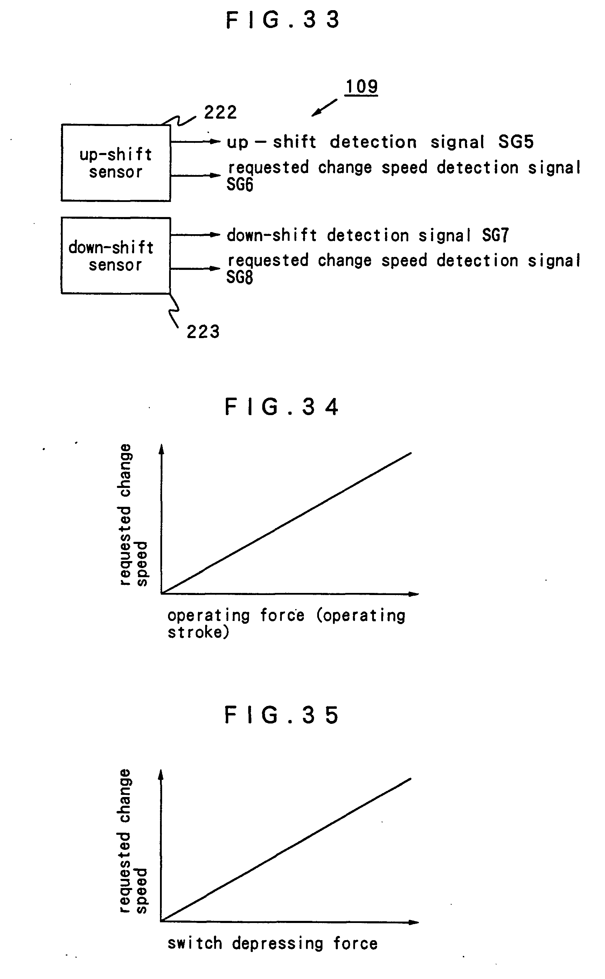

Fig. 33 is a block diagram showing a manual speed change operating unit in accordance with a fourth embodiment of the present invention. Fig. 34 is a graph showing a first requested change speed map in accordance with the fourth embodiment of the present invention. Fig. 35 is a graph showing a second requested change speed map in accordance with the fourth embodiment of the present invention. In Fig. 34, the axis of abscissa represents an operating force or operating stroke whereas the axis of ordinate represents a requested change speed. In Fig. 35, the axis of abscissa represents a switch depressing force whereas the axis of ordinate represents a requested change speed.

In this embodiment, an up-shift sensor 222 and a down-shift sensor 223 are used instead of the up-shift switch SW2 (Fig. 1) and the down-shift switch SW3, respectively. An up-shift detection signal SG5 and a requested change speed detection signal SG6 are outputted from the up-shift sensor 222, and a down-shift detection signal SG7 and a requested change speed detection signal SG8 are outputted from the down-shift sensor 223.

A pressure sensor, a strain gage, a stroke sensor which are not shown and the like can be used as the up-shift sensor 222 and the down-shift sensor 223. Hence, as shown in Fig. 34, the requested change speed can be changed by changing an operating force, an operating stroke (period of time) or the like, by which a switch for actuating the up-shift sensor 222 and the down-shift sensor 223 as another operating amount is depressed.

Also, as shown in Fig. 35, the requested change speed can be changed with changing the force for depressing the switch which actuates the up-shift sensor 222 and the down-shift sensor 223.

Hence, since the up-shift operation and the down-shift operation as well as the setting of the requested change speed can be executed simultaneously, the manual speed change operating unit 109 is operated with ease. In other words, when a desired torque ratio is intended to be rapidly obtained, the change speed is enhanced. When the desired torque ratio is intended to be slowly obtained, the change speed can be lowered, thereby being capable of achieving a comfortable running.

**Claims**

1. A control apparatus for a vehicle transmission comprising:

   a non-stage transmission (3);
   a manual speed change operating unit (109) outputting an up-shift signal and down-shift signal by manual operation; and
   a speed change control means (103) which detects an output signal from said manual speed change operating unit (109) and controls the speed ratio of said non-stage transmission, characterized in that said speed change control means (103) continues to change the speed ratio of said non-stage transmission (3) while detecting the output signal from the manual speed change operating unit (109).

2. An apparatus as claimed in claim 1, wherein said manual speed change operating unit (109) includes change speed setting means (202) for setting a change speed.

3. An apparatus as claimed in claim 2, wherein said change speed setting means (202) sets the change speed in association with the operating amount of an up-shift (SW2) operation and an down-shift (SW3) operation.

4. An apparatus as claimed in any of claims 1 to 3, further comprising:

   running condition detecting means for detecting the running conditions of a vehicle, wherein said non-stage transmission (3) for executing the speed change comprises an automatic speed change mode in which the speed ratio is automatically set on the basis of the running condition of a vehicle and a manual speed change mode in which a speed ratio selected by a driver is set; and
   said speed change control means (103) performs the change-over between the automatic speed change mode and the manual speed change mode.

5. An apparatus as claimed in claim 4, wherein said speed change control means (103) includes speed change condition holding means for holding the speed change condition immediately before when the automatic speed change mode is changed over to the manual speed change mode.

6. An apparatus as claimed in claims 4 or 5, wherein said speed change control means (103) detects one of the up-shift operation and the down-shift operation to change over from the automatic speed change mode to the manual speed change mode, and detects both of the up-shift (SW2) operation and the down-shift (SW3) operation to change over from the manual speed change mode to the automatic speed change mode.

7. An apparatus as claimed in claim 4, 5 or 6, wherein said manual speed change operating unit (109) includes automatic/ manual speed change mode selecting means (201) for performing a change-over between the automatic speed change mode and the manual speed change mode.

8. An apparatus as claimed in any of claims 4 to 7, wherein said manual speed change operating unit (109) includes automatic speed change mode selecting means (220) for changing over from the manual speed change mode to the automatic speed change mode, and said speed change control means (103) detects one of the up-shift (SW2) operation and the down-shift SW3) operation to change over from the automatic speed change mode to the manual speed change mode.

9. An apparatus as claimed in any of claims 4 to 8, wherein said manual speed change operating unit (109) includes change speed setting means (202) for setting a change speed.

10. An apparatus as claimed in claim 9, wherein said change speed setting means (202) sets a change speed in association with the operating amount of the up-shift (SW2) operation and the down-shift (SW3) operation.

**Patentansprüche**

1. Steuervorrichtung für ein Fahrzeuggetriebe mit:

   einem stufenlosen Getriebe (3);
   einer manuellen Gangwechselbetätigungseinheit (109), die ein Hochschaltsignal und ein Herunterschaltsignal durch manuelle Betätigung ausgibt; und
   eine Gangwechselsteuereinrichtung (103), die ein Ausgangssignal aus der manuellen Gangwechselbetätigungseinheit (109) detektiert und das Übersetzungsverhältnis des stufenlosen Getriebes steuert, dadurch gekennzeichnet, daß die Gangwechselsteuereinrichtung (103) damit fortfährt, das Übersetzungsverhältnis des stufenlosen Getriebes (3) zu ändern, während das Ausgangssignal von der manuellen Gangwechselbetätigungseinheit (109) detektiert wird.

2. Vorrichtung nach Anspruch 1, wobei die manuelle Gangwechselbetätigungseinheit (109) eine Wechselgeschwindigkeit-Einstelleinrichtung (202) zum Einstellen einer Wechselgeschwindigkeit aufweist.

3. Vorrichtung nach Anspruch 2, wobei die Wechselgeschwindigkeit-Einstelleinrichtung (202) die Wechselgeschwindigkeit in Verbindung mit dem Betätigungsbetrag einer Hochschaltbetätigung (SW2) und einer Herunterschaltbetätigung (SW3) einstellt.

4. Vorrichtung nach einem der Ansprüche 1 bis 3, die ferner aufweist:
eine Fahrbedingung-Detektionseinrichtung zum Detektieren der Fahrbedingungen eines Fahrzeugs, wobei das stufenlose Getriebe (3) zum Ausführen des Gangwechsels einen automatischen Gangwechselmodus, in dem das Übersetzungsverhältnis automatisch auf der Grundlage der Fahrbedingung eines Fahrzeugs eingestellt wird, und einen manuellen Gangwechselmodus, in dem ein Übersetzungsverhältnis, das durch einen Fahrer ausgewählt wird, eingestellt wird, aufweist; und die Gangwechselsteuereinrichtung (103) die Umschaltung zwischen dem automatischen Gangwechselmodus und dem manuellen Gangwechselmodus ausführt.

5. Vorrichtung nach Anspruch 4, wobei die Gangwechselsteuereinrichtung (103) eine Gangwechselbedingung-Halteeinrichtung aufweist zum Halten der Gangwechselbedingung unmittelbar bevor der automatische Gangwechselmodus zum manuellen Gangwechselmodus umgeschaltet wird.

6. Vorrichtung nach Anspruch 4 oder 5, wobei die Gangwechselsteuereinrichtung (103) eine der Hochschaltbetätigung und der Herunterschaltbetätigung detektiert, um vom automatischen Gangwechselmodus zum manuellen Gangwechselmodus umzuschalten, und beide der Hochschaltbetätigung (SW2) und der Herunterschaltbetätigung (SW3) detektiert, um vom manuellen Gangwechselmodus zum automatischen Gangwechselmodus umzuschalten.

7. Vorrichtung nach Anspruch 4, 5 oder 6, wobei die manuelle Gangwechselbetätigungseinheit (109) eine Automatisch/Manuell-Gangwechselmodus-Auswahleinrichtung (201) aufweist zum Ausführen einer Umschaltung zwischen dem automatischen Gangwechselmodus und dem manuellen Gangwechselmodus.

8. Vorrichtung nach einem der Ansprüche 4 bis 7, wobei die manuelle Gangwechselbetätigungseinheit (109) eine automatische Gangwechselmodus-Auswahleinrichtung (220) aufweist zum Umschalten vom manuellen Gangwechselmodus zum automatischen Gangwechselmodus, und die Gangwechselsteuereinrichtung (103) eine der Hochschaltbetätigung (SW2) und der Herunterschaltbetätigung (SW3) detektiert, um vom automatischen Gangwechselmodus zum manuellen Gangwechselmodus umzuschalten.

9. Vorrichtung nach einem der Ansprüche 4 bis 8, wobei die manuelle Gangwechselbetätigungseinheit (109) eine Wechselgeschwindigkeit-Einstelleinrichtung (202) aufweist zum Einstellen einer Wechselgeschwindigkeit.

10. Vorrichtung nach Anspruch 9, wobei die Wechselgeschwindigkeit-Einstelleinrichtung (202) eine Wechselgeschwindigkeit in Verbindung mit dem Betätigungsbetrag der Hochschaltbetätigung (SW2) und der Herunterschaltbetätigung (SW3) einstellt.

## Revendications

1. Appareil de commande pour une transmission de véhicule comprenant :

   - une transmission (3) non étagée ;
   - une unité fonctionnelle (109) de changement de vitesse manuel fournissant un signal de montée des vitesses et un signal de descente des vitesses par fonctionnement manuel ; et
   - un moyen (103) de commande de changement de vitesse qui détecte un signal de sortie provenant de l'unité fonctionnelle (109) de changement de vitesse manuel et qui commande le rapport de vitesses de ladite transmission non étagée,

   caractérisé en ce que ledit moyen (103) de commande de changement de vitesse continue à modifier le rapport de vitesses de ladite transmission (3) non étagée, tout en détectant le signal fourni par l'unité fonctionnelle (109) de changement de vitesse manuel.

2. Appareil selon la revendication 1, dans lequel ladite unité fonctionnelle (109) de changement de vitesse manuel comprend un moyen (202) de réglage de la vitesse de changement pour régler une vitesse de changement.

3. Appareil selon la revendication 2, dans lequel ledit moyen (202) de réglage de la vitesse de changement règle la vitesse de changement en association avec l'ampleur fonctionnelle d'une opération de montée des vitesses (SW2) et d'une opération de descente des vitesses (SW3).

**4.** Appareil selon l'une quelconque des revendications 1 à 3, comprenant en outre :

-   un moyen de détection des conditions de fonctionnement pour détecter les conditions de fonctionnement d'un véhicule, où ladite transmission (3) non étagée servant à exécuter le changement de vitesse comprend un mode de changement de vitesse automatique dans lequel le rapport de vitesses est automatiquement réglé sur la base des conditions de fonctionnement d'un véhicule, et un mode de changement de vitesse manuel dans lequel est réglé un rapport de vitesses sélectionné par un conducteur ; et
-   ledit moyen (103) de commande de changement de vitesse réalise le passage entre le mode de changement de vitesse automatique et le mode de changement de vitesse manuel.

**5.** Appareil selon la revendication 4, dans lequel ledit moyen (103) de commande de changement de vitesse comprend un moyen de maintien des conditions de changement de vitesse, pour maintenir les conditions de changement de vitesse juste avant le moment où le mode de changement de vitesse automatique passe en mode de changement de vitesse manuel.

**6.** Appareil selon la revendication 4 ou 5, dans lequel ledit moyen (103) de commande de changement de vitesse détecte une des opérations de montée des vitesses et une des opérations de descente des vitesses, pour passer du mode de changement de vitesse automatique au mode de changement de vitesse manuel, et qui détecte à la fois l'opération de montée des vitesses (SW2) et l'opération de descente des vitesses (SW3), pour passer du mode de changement de vitesse manuel au mode de changement de vitesse automatique.

**7.** Appareil selon les revendications 4, 5 ou 6, dans lequel ladite unité fonctionnelle (109) de changement de vitesse manuel comprend un moyen (201) de sélection du mode de changement de vitesse automatique/manuel, pour réaliser un passage entre le mode de changement de vitesse automatique et le mode de changement de vitesse manuel.

**8.** Appareil selon l'une quelconque des revendications 4 à 7, dans lequel ladite unité fonctionnelle (109) de changement de vitesse manuel comprend un moyen (220) de sélection du mode de changement de vitesse automatique, pour passer du mode de changement de vitesse manuel au mode de changement de vitesse automatique, et ledit moyen (103) de commande de changement de vitesse détecte une des opérations de montée des vitesses (SW2) et une des opérations de descente des vitesses (SW3), pour passer du mode de changement de vitesse automatique au mode de changement de vitesse manuel.

**9.** Appareil selon l'une quelconque des revendications 4 à 8, dans lequel ladite unité opérationnelle (109) de changement de vitesse manuel comprend un moyen (202) de réglage de la vitesse de changement pour régler une vitesse de changement.

**10.** Appareil selon la revendication 9, dans lequel ledit moyen (202) de réglage de la vitesse de changement règle une vitesse de changement en association avec l'amplitude fonctionnelle de l'opération de montée des vitesses (SW2) et de l'opération de descente des vitesses (SW3).

# F I G . 1

109

SW2

up-shift switch

121 steering

down-shift
switch

SW3

up/down/electric horn
detection signal SG3

horn switch

SW1

automatic/manual
selection switch

201

automatic/manual selection
signal SG1

change speed setting volume

202

requested change speed
detection signal SG2

# F I G . 2

FIG. 3

# FIG. 4

# FIG. 5

manual speed change operating unit — 109

E | P
104: pattern switch

112: lateral acceleration sensor

T    103    Ps

## ECU

best fuel consumption, maximum motive force
control suitable for environments (go up, go down, etc)
  CVT torque ratio control
  CVT change speed control
  engine brake
  L-up control
  accumulator back pressure control
  manual speed change control

i₁

b

s  106: shift position switch

i₂

111: steering sensor

Pb    Pt    90

solenoid ~95a    solenoid ~93a

95    94    93    92    91

back pressure control unit

speed selection unit

lock-up control unit

line pressure adjusting unit

pump

hydraulic control unit

121: steering

P R N D S_H S_L
105: shift lever

108: brake signal detection unit

107

nₛ  nₘ  m  bₘ  n_p    to reverse brake    to forward clutch    to lock-up clutch    θ  nₑ t

EP 0 681 119 B1

# FIG.6

**301:** primary rotation sensor

from speed selection unit

from speed selection unit

from lock-up control unit

**101:** throttle opening degree sensor

$n_s$  $n_m$  m  $b_m$  $n_p$  θ  $n_e$  t

**7:** CVT speed change motor

**7e:** brake

**701:** motor rotation sensor

**302:** secondary rotation sensor

31c

31

32

32c

**3:** non-stage speed gear shifter

**2:** forward/ reverse change-over unit

reverse brake 25

forward clutch 23

torque convertor 12

lock-up clutch 11

**100:** engine

radiator

**1:** starting unit

**209:** oil temp sensor

**102:** engine rotation sensor

EP 0 681 119 B1

# FIG. 7

| | | |
|---|---|---|
| 109 — manual speed change operating unit | T / $A_0$ | manual speed change operation detecting section | ~103a |
| 701 — motor rotation sensor | $n_m$ / $A_1$ | motor rotational speed calculating section |
| 101 — throttle opening degree sensor | $\theta$ / $A_2$ | throttle opening degree detecting section |
| | $A_3$ | throttle change ratio detecting section |
| 301 — primary rotation sensor | $n_p$ / $A_4$ | primary revolution number detecting section |
| 302 — secondary rotarion sensor | $n_s$ / $A_5$ | secondary revolution number detecting section |
| | $A_6$ | vehicle speed detecting section |
| 102 — engine rotation sensor | $n_e$ / $A_7$ | engine speed detecting section |
| 104 — pattern switch | $P_s$ / $A_8$ | pattern switch detecting section |
| 106 — shift position switch | s / $A_9$ | shift position detecting section |
| | $A_{10}$ | shift position change detecting section |
| 108 — brake signal detection unit | b / $A_{11}$ | brake signal detecting section |
| 114 — battery voltage sensor | $V_{at}$ / $A_{12}$ | battery voltage detecting section |
| 115 — motor current sensor | $i_m$ / $A_{13}$ | motor current detecting section |
| 209 — oil temp. sensor | t / $A_{14}$ | oil temp. detecting section |
| 111 — steering angle sensor | $i_2$ / $A_{15}$ | steering angle detecting section |
| 112 — lateral acceleration sensor | $i_1$ / $A_{16}$ | lateral acceleration detecting section |

# F I G . 8

# FIG. 9

# F I G . 1 0

start

period $t_1$ elapsed — S1

N

Y

read input from sensor and the like | S2

actual torque ratio calculation process | S3

automatic/manual changeover process | S4

automatic speed change mode — S5 N

Y

desired torque ratio upper/lower calculation process | S6

CVT speed change judging process | S7

motor control process | S8

back-pressure solenoid control process | S9

lock-up solenoid control process | S10

FIG. 11

FIG. 12

FIG. 13

FIG. 14

# FIG. 15

```
        ┌──────────────┐
        │    start     │
        └──────┬───────┘
               │
          ╱─────────────╲                    S4-1
        ╱  select automatic speed ╲
      ╱   change mode by automatic/  ╲─────── N
        ╲  manual selection  switch ╱
          ╲─────────────╱
               │ Y    S4-3                            S4-2
     ┌─────────┴──────────────┐          ┌──────────────────────────┐
     │ change over to automatic speed │  │ change over to manual speed │
     │ change mode             │          │ change mode              │
     └─────────┬──────────────┘          └──────────────────────────┘
               │◄────────────────────────────────────┘
        ┌──────┴───────┐
        │    return    │
        └──────────────┘
```

# FIG. 16

# FIG. 17

| | operation mode | | | |
|---|---|---|---|---|
| | MO | M1 | M2 | M3 |
| operation state | | | | |
| output voltage | 5 (V) | 4.26~4.24 (V) | 3.72~3.65 (V) | 3.35~3.23 (V) |

EP 0 681 119 B1

# F I G. 1 8

| operating mode | M4 | M5 | M6 | M7 |
|---|---|---|---|---|
| operation state | (circuit diagram) | (circuit diagram) | (circuit diagram) | (circuit diagram) |
| output voltage | 2.91～2.72 [V] | 1.70～1.19 [V] | 2.48～2.19 [V] | 0.83 [V] |

# FIG.19

| mode | horn-switchSW1 | up-shift switchSW2 | down-shift switchSW3 | output voltage |
|---|---|---|---|---|
| M0 | off | off | off | $VCC2$ |
| M1 | off | off | on | $\dfrac{R3+RS}{R3+R4+RS} \cdot VCC2$ |
| M2 | off | on | off | $\dfrac{R2+RS}{R2+R4+RS} \cdot VCC2$ |
| M3 | off | on | on | $\dfrac{(R2//R3)+RS}{(R2//R3)+R4+RS} \cdot VCC2$ |
| M4 | on | off | off | $\dfrac{\{R1//(R5+R6)\}+RS}{\{R1//(R5+R6)\}+R4+RS} \cdot VCC2$ |
| M5 | on | off | on | $\dfrac{(R1//R3//R5)+RS}{(R1//R3//R5)+R4+RS} \cdot VCC2$ |
| M6 | on | on | off | $\dfrac{(R1//R2//R6)+RS}{(R1//R2//R6)+R4+RS} \cdot VCC2$ |
| M7 | on | on | on | $\dfrac{RS}{R4+RS} \cdot VCC2$ |

# FIG.20

| R1 | R2 | R3 | R4 | R5 | R6 | RS | VCC2 |
|---|---|---|---|---|---|---|---|
| 2.2K | 2.7K | 5.6K | 1.0K | 390 | 2.2K | 0~200 | 5 [V] |

# FIG.21

0 [V]                                                                    5 [V]

M7        M5        M6  M4      M3    M2    M1        M0

FIG. 22

```
                    ┌──────────┐
                    │  Start   │
                    └──────────┘
                          │
      N           ◇ CVT  speed  change ◇   S7 - 1
  ◄───────────────◇    motor  normal    ◇
                    ◇                    ◇
                          │ Y
      N           ◇ shift  position D,SH,SL ◇  S7 - 2
  ◄───────────────◇                    ◇
                          │ Y
      N           ◇ vehicle  speed ≠ 0 ◇   S7 - 3
  ◄───────────────◇                    ◇
                          │ Y
                  ◇ automatic speed change mode ◇  S7 - 4   N     (3)
  ◄───────────────◇                    ◇─────────────────
                          │ Y
                  ◇  T *min > Tp  ◇    S7 - 5  Y
  ◄───────────────◇                    ◇───────────────┐
                          │ N
      N           ◇  Tp > T *max  ◇     S7 - 7
  ◄───────────────◇                    ◇
                          │ Y        S7 - 9
              ┌─────────────────────┐         ┌─────────────────────┐  S7 - 6
              │  up − shift  speed  │         │ down − shift  speed  │
              │  change  command    │         │ change  command      │
              └─────────────────────┘         └─────────────────────┘
                          │
              ┌─────────────────────┐  S7 - 10
              │   e' = f (x, v)      │
              └─────────────────────┘
                          │
      (1)                (2)
```

e' = f (x, v)    S7 - 10

# FIG. 23

EP 0 681 119 B1

# F I G . 2 4

# F I G . 2 5

```
                    ┌─────────────┐
                    │    start    │
                    └──────┬──────┘
                           │        S8-1
                          ╱│╲
                        ╱    ╲         Y
                      ╱ alarm  ╲──────────────────────────────┐
                        ╲     ╱                                │
                          ╲ ╱                                  │
                           │ N                                 │
              ┌────────────────────────┐                       │
              │  calculate actual motor│    S8-3               │
              │  revolution number MVP │                       │
              └────────────┬───────────┘                       │
              ┌────────────────────────┐                       │
              │ calculate desired motor│    S8-4               │
              │ revolution number MVTGT│                       │
              └────────────┬───────────┘                       │
              ┌────────────────────────┐                       │
              │  D_Bass = f₁ ( MVP, V_P )│   S8-5               │
              └────────────┬───────────┘                       │
              ┌────────────────────────┐                       │
              │  D_CRT = f₂ ( y, V_P )  │    S8-6               │
              └────────────┬───────────┘                       │
              ┌────────────────────────┐         ┌───────────────────┐
              │ D_CTL = D_Bass + D_CRT  │  S8-7   │    D_CTL = 0      │  S8-2
              └────────────┬───────────┘         └─────────┬─────────┘
                           │◄─────────────────────────────┘
              ┌────────────────────────┐
              │ output control duty ratio to│  S8-8
              │    motor drive driver  │
              └────────────┬───────────┘
                    ┌─────────────┐
                    │   return    │
                    └─────────────┘
```

S8-5 $D_{Bass} = f_1 ( MVP, V_P )$

S8-6 $D_{CRT} = f_2 ( y, V_P )$

S8-7 $D_{CTL} = D_{Bass} + D_{CRT}$

S8-2 $D_{CTL} = 0$

# F I G . 2 6

# FIG. 27

# FIG. 28

FIG.29

```
              ┌─────────┐
              │  start  │
              └─────────┘
                   │
            ╱──────────────╲  S4-11
          ╱  preceding cycle  ╲      N
         ╱   is auto speed      ╲──────────────────────────┐
          ╲   change mode?     ╱                           │
            ╲──────────────╱                               │
                   │ Y                                      │
            ╱──────────────╲  S4-12            ╱──────────────╲  S4-14
          ╱   up-shift        ╲      N        ╱  up-shift        ╲      N
         ╱ switch and down-shift╲────┐       ╱ switch and down-shift╲────┐
          ╲ switch depressed   ╱     │        ╲ switch depressed    ╱    │
            ╲──────────────╱         │         ╲ simultaneously? ╱       │
                   │ Y               │           ╲──────────╱            │
         ┌──────────────────┐        │                │ Y                │
         │ change over to   │ S4-13  │      ┌──────────────────┐         │
         │ manual speed     │        │      │ change over auto │ S4-15   │
         │ change mode      │        │      │ speed change mode│         │
         └──────────────────┘        │      └──────────────────┘         │
                   │◄────────────────┘                │◄────────────────┘
              ┌─────────┐
              │  return │
              └─────────┘
```

FIG.30

# FIG.31

121 steering

up-shift switch — SW2

down-shift switch — SW3 ⟹ up/down/horn detection signal SG3

horn switch — SW1

change speed setting volume 202 → requested change speed detection signal SG2

reset switch 220 → manual release detection signal SG4

# FIG.32

start

↓

S4-21 preceding cycle is automatic speed change mode? — N

Y ↓

S4-24 up-shift switch or down-shift switch depressed? — N

Y ↓

S4-25 change over to manual speed change mode

S4-22 reset switch depressed? — N

Y ↓

S4-23 change over to automatic speed change mode

↓

return

# F I G . 3 3

109

222

up-shift sensor → up — shift detection signal SG5

→ requested change speed detection signal SG6

down-shift sensor → down-shift detection signal SG7

→ requested change speed detection signal SG8

223

# F I G . 3 4

requested change speed (vertical axis)

operating force (operating stroke)

# F I G . 3 5

requested change speed (vertical axis)

switch depressing force